(19) Europäisches Patentamt European Patent Office Office européen des brevets

(11) EP 4 043 987 A1

(12) **EUROPEAN PATENT APPLICATION**
published in accordance with Art. 153(4) EPC

(43) Date of publication:
17.08.2022 Bulletin 2022/33

(21) Application number: 20889205.9

(22) Date of filing: 26.08.2020

(51) International Patent Classification (IPC):
*G05D 1/02* (2020.01)

(52) Cooperative Patent Classification (CPC):
G06K 9/00; G06T 7/246; G06T 7/60

(86) International application number:
PCT/CN2020/111345

(87) International publication number:
WO 2021/098320 (27.05.2021 Gazette 2021/21)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 18.11.2019 CN 201911129500

(71) Applicant: Huawei Technologies Co., Ltd.
Shenzhen, Guangdong 518129 (CN)

(72) Inventors:
• WAN, Guangnan
Shenzhen, Guangdong 518129 (CN)
• WANG, Jianguo
Shenzhen, Guangdong 518129 (CN)
• LUO, Jingxiong
Shenzhen, Guangdong 518129 (CN)

(74) Representative: MERH-IP Matias Erny Reichl
Hoffmann
Patentanwälte PartG mbB
Paul-Heyse-Strasse 29
80336 München (DE)

(54) **ROAD CONSTRAINT DETERMINATION METHOD AND DEVICE**

(57) This application discloses a road constraint determining method and apparatus, applied to the intelligent driving field, and in particular, to a sensor in an advanced driver assistance system ADAS or an autonomous driving system, for example, radar and/or a photographing apparatus. In this method, a moving state of a target is determined based on detection information of the target; at least one road geometry of a road on which the target is located is determined based on the detection information of the target; and a road constraint of the target is determined based on the at least one road geometry and the moving state of the target. The road constraint includes at least one of a road direction constraint and a road width constraint. According to the solutions in this application, road constraint determining accuracy can be improved, and target tracking accuracy can be further improved. An autonomous driving capability or an ADAS capability is further improved, and may be applied to an internet of vehicles, for example, vehicle-to-everything V2X, a long term evolution-vehicle communications technology LTE-V, and vehicle-to-vehicle V2V

FIG. 2

EP 4 043 987 A1

**Description**

**TECHNICAL FIELD**

This application relates to the field of target tracking technologies, and in particular, to a road constraint determining method and apparatus.

**BACKGROUND**

For a target on the ground, a motion of the target is usually predictable due to a constraint of a road or a geographical environment. Therefore, a target tracking technology usually can be used to predict a moving state of the target. In an advanced driver assistant system (advanced driving assistant system, ADAS) or an unmanned driving system, the target tracking technology is usually used to predict the moving state of the target. In this case, the target may be one or more moving or static objects, for example, may be a bicycle, a motor vehicle, a human, or an animal.

In the ADAS or the unmanned driving system, to track the target, a tracking device is usually disposed. The tracking device may obtain detection information transmitted by a device such as radar or an imaging apparatus, and track the target by using the target tracking technology. Detection information transmitted by the radar usually includes distance, azimuth, and velocity information, or the like of the target, and detection information transmitted by the imaging apparatus is usually an image including the target, or the like. Then, the tracking device tracks the target based on the detection information and a preset algorithm (for example, a Kalman filter algorithm).

Further, in consideration that the target is constrained by an external environment in a moving process, for example, the target is constrained by a road edge or a lane line when the target moves on the road, the target can only move in a specific region. Therefore, to improve target tracking accuracy, in another target tracking method, the tracking device may further use a road constraint in addition to obtaining the detection information, to further improve the target tracking accuracy.

In addition, in the ADAS, a moving track of the target in a subsequent period of time, for example, 2s, usually further needs to be predicted. To ensure accuracy of a prediction result, the road constraint may also be used in the ADAS, to further improve accuracy of predicting a future track of the target.

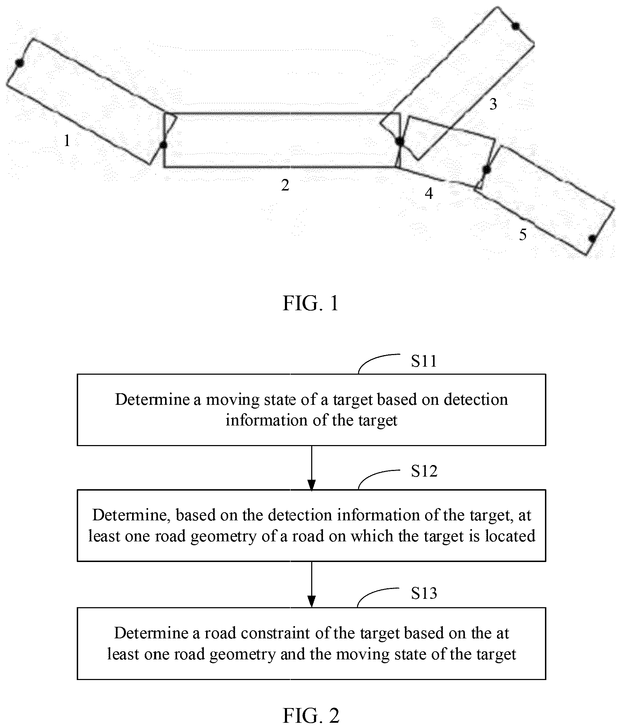

In this method, the road constraint usually includes a road direction constraint and a road width constraint. Referring to a schematic diagram in FIG. 1, in an existing road constraint determining method, a road on which the target is located is divided into at least one road segment. Each road segment is usually represented by two endpoints, namely, a head endpoint and a tail endpoint, of the road segment and a connection line between the two endpoints. A curved road is divided into a plurality of connected road segments. For example, in the schematic diagram of the road in FIG. 1, the road is divided into five head-to-tail connected road segments. In this case, it is determined that a direction of a connection line between a head endpoint and a tail endpoint of a road segment in which a vehicle is located is a road direction constraint, and a width of each road segment is a road width constraint.

However, when the road constraint is determined in an existing method, a considered road scenario is simple, but there are usually a plurality of cases of an actual road such as discontinuity, intersection, and combination, and a road condition is complex. Therefore, a road constraint obtained by using the conventional technology has a large error. Consequently, accuracy of the road constraint is low, and target tracking accuracy is further affected.

**SUMMARY**

To resolve a problem that there is low accuracy of a road constraint obtained during tracking of a target in the conventional technology, embodiments of this application disclose a road constraint determining method and apparatus.

According to a first aspect, an embodiment of this application discloses a road constraint determining method, including:

determining a moving state of a target based on detection information of the target;
determining, based on the detection information of the target, at least one road geometry of a road on which the target is located, where each of the at least one road geometry is represented by using at least one piece of information; and
determining a road constraint of the target based on the at least one road geometry and the moving state of the target, where the road constraint includes at least one of a road direction constraint and a road width constraint.

In the foregoing steps, the road constraint of the target is determined based on the road geometry and the moving state of the target. The road geometry can reflect a geometric shape of the road on which the target is located. Therefore, in comparison with the conventional technology, in the solution in this embodiment of this application, road constraint determining accuracy can be improved, and target tracking accuracy can be further improved.

In an optional design, the method further includes:

determining at least one target road geometry in the at least one road geometry; and
the determining a road constraint of the target based on the at least one road geometry and the moving state of the target includes:
determining the road constraint of the target based on the at least one target road geometry and the moving state of the target.

By performing the foregoing steps, the target road geometry in the road geometry can be determined. The target road geometry is a road geometry used to subsequently determine the road constraint. The road constraint is determined based on the target road geometry, to further improve the road constraint determining accuracy.

In an optional design, the determining at least one target road geometry in the at least one road geometry includes:

performing the following steps for each of the at least one road geometry:

determining a tangent direction angle of the road geometry at a first location, where the tangent direction angle is an included angle between a tangent line of the road geometry at the first location and a radial direction;
obtaining a tangent direction angle at a target location of the target based on a lateral velocity and a radial velocity at the target location of the target, where a distance between the target location of the target and the first location falls within a first distance range; and
determining the road geometry as the target road geometry if an absolute value of a difference between the tangent direction angle at the first location and the tangent direction angle at the target location is less than a first threshold.

By performing the foregoing steps, the target road geometry in the road geometry can be determined based on the tangent direction angle at the target location of the target and the tangent direction angle of the road geometry at the first location.

In an optional design, the determining at least one target road geometry in the at least one road geometry includes:

performing the following steps for each of the at least one road geometry:
determining the road geometry as the target road geometry if a distance between the target and the road geometry falls within a second distance range.

By performing the foregoing steps, the target road geometry in the road geometry can be determined based on the distance between the target and the road geometry.

In an optional design, the determining at least one target road geometry in the at least one road geometry includes:

performing the following steps for each of the at least one road geometry:

obtaining a distance between the target and the road geometry; and
determining, based on a quantity of the at least one road geometry, that Num road geometries at a smallest distance is the at least one target road geometry, where Num is a positive integer not less than 1.

By performing the foregoing steps, the target road geometry in the road geometry can be determined based on the distance between the target and the road geometry and the quantity of road geometries.

In an optional design, the determining a road direction constraint of the target based on the at least one road geometry and the moving state of the target includes:

determining at least one second location respectively located in the at least one target road geometry, where the at least one second location is a location closest to the target in at least one first target road geometry, and the first target road geometry is a target road geometry in which the second location is located; and
determining the road direction constraint of the target based on a confidence level of the at least one target road geometry and a tangent direction angle of the at least one target road geometry at the at least one second location.

By performing the foregoing steps, the road direction constraint of the target can be determined based on the second location in the target road geometry and the confidence level of the target road geometry.

In an optional design, the confidence level of the target road geometry is a confidence level of a road parameter of the target road geometry; or
the confidence level of the target road geometry is a confidence level of the tangent direction angle of the target road geometry at the second location.

In an optional design, when the confidence level of the target road geometry is the confidence level of the road parameter of the target road geometry, the method further includes:

determining the confidence level of the road parameter of the target road geometry based on a variance or a standard deviation of the road parameter of the target road geometry, where the road parameter is at least one piece of information used to represent the target road geometry; or

when the confidence level of the target road geometry is the confidence level of the tangent direction angle of the target road geometry at the second location, the method further includes:

determining the confidence level of the tangent direction angle of the target road geometry at the second location based on a variance or a standard deviation of the tangent direction angle of the target road geometry at the second location.

In an optional design, the determining the road direction constraint of the target based on a confidence level of the at least one target road geometry and a tangent direction angle of the at least one target road geometry at the at least one second location includes:

determining, based on the confidence level of the target road geometry, a weight value that is of the tangent direction angle of the at least one target road geometry at the at least one second location and that exists during fusion; and

determining, based on the weight value, that a fusion result obtained after fusion is performed on the tangent direction angle is the road direction constraint of the target.

In an optional design, determining, based on a confidence level of each target road geometry, a weight value that is of a tangent direction angle of each target road geometry and that exists during fusion includes:

determining a weight value of a tangent direction angle of each target road geometry at a second location based on a correspondence between a confidence level and a weight value of the road geometry and the confidence level of each target road geometry; or

determining the weight value based on any one of the following formulas:

$$w_i = \frac{\delta(\phi(i))}{\sum_{i=1}^{n} \delta(\phi(i))};$$

and

$$w_i = \frac{\delta(\phi(i)) * h(d_i)}{\sum_{i=1}^{n} \delta(\phi(i)) * h(d_i)}.$$

Herein, $w_i$ represents a weight value that is of a tangent direction angle of an $i^{th}$ target road geometry and that exists during fusion; $\phi(i)$ is a tangent direction angle of the $i^{th}$ target road geometry at the second location; $\delta(\phi(i))$ is a confidence level of the $i^{th}$ target road geometry; $n$ is a quantity of target road geometries; and $h(d_i)$ is a shortest distance between the target and the $i^{th}$ target road geometry.

By performing the foregoing steps, the weight value that is of the tangent direction angle of the at least one target road geometry at the at least one second location and that exists during fusion can be determined.

In an optional design, the determining the road direction constraint of the target based on a confidence level of the at least one target road geometry and a tangent direction angle of the at least one target road geometry at the at least one second location includes:

determining that the tangent direction angle at the second location is the road direction constraint of the target, where the second location is a location closest to the target in a second target road geometry, and the second target road geometry is a target road geometry with a highest confidence level in the at least one target road geometry.

In an optional design, the determining the road direction constraint of the target based on a confidence level of the at least one target road geometry and a tangent direction angle of the at least one target road geometry at the at least one second location includes:

determining that a tangent direction angle at a third location is the road direction constraint of the target, where the third location is a location closest to the target in a third target road geometry, and the third target road geometry is a target road geometry closest to the target in the at least one target road geometry.

In an optional design, the determining a road width constraint of the target based on the at least one target road geometry and the moving state of the target includes:

obtaining a straight line that passes through the target location of the target and that is perpendicular to a fourth target road geometry, where the fourth target road geometry is two target road geometries closest to the target that are respectively located on two sides of the target; and

determining that a distance between two points of intersection is the road width constraint of the target, where the two points of intersection are two points of intersection of the straight line and the fourth target road geometry.

In an optional design, the determining a road width constraint of the target based on the at least one target road geometry and the moving state of the target includes:

determining at least one distance between the target and the at least one target road geometry, where the at least one distance is the road width constraint of the target; or

determining at least one distance between the target and the at least one target road geometry, and determining that a largest value or a smallest value of the at least one distance is the road width constraint of the target; or

determining a distance between the target and the at least one target road geometry, and determining an average value of the at least one distance as the road width constraint of the target.

In an optional design, the method further includes:

determining a measurement matrix including the road direction constraint; and

determining a confidence level of the road direction constraint in the measurement matrix based on the road width constraint.

By performing the foregoing steps, the measurement matrix can be determined based on the road direction constraint and the road width constraint, and when the target is tracked based on the measurement matrix, target tracking accuracy can be improved.

In an optional design, the determining a confidence level of the road direction constraint in the measurement matrix based on the road width constraint includes:

determining, based on a mapping relationship between the road width constraint and measured noise and the road width constraint, measured noise corresponding to the target; and

determining the confidence level of the road direction constraint in the measurement matrix based on a mapping relationship between the measured noise and the confidence level of the road direction constraint in the measurement matrix and the measured noise corresponding to the target.

In an optional design, after the determining, based on a mapping relationship between the road width constraint and measured noise and the road width constraint, measured noise corresponding to the target, the method further includes:

determining a moving state change parameter of the target based on the moving state of the target;

when a comparison result of the moving state change parameter of the target and a corresponding threshold indicates that a degree of change of a curvature or a degree of change of a curvature change rate of the target road geometry at a fourth location needs to be determined, determining the degree of change of the curvature or the degree of change of the curvature change rate of the target road geometry at the fourth location, where the fourth location is a location that is located in the target road geometry and whose distance from the target falls within a third distance range; and

when the degree of change of the curvature or the degree of change of the curvature change rate is greater than a third threshold, increasing the measured noise corresponding to the target; and

the determining the confidence level of the road direction constraint in the measurement matrix based on a mapping relationship between the measured noise and the confidence level of the road direction constraint in the measurement matrix and the measured noise corresponding to the target includes:

determining the confidence level of the road direction constraint in the measurement matrix based on the increased measured noise and the mapping relationship between the measured noise and the confidence level of the road direction constraint in the measurement matrix.

By performing the foregoing steps, the measured noise can be adjusted based on the moving state change parameter of the target. Further, the confidence level of the road direction constraint in the measurement matrix can be further determined based on the adjusted measured noise. When the degree of change of the curvature or the degree of change of the curvature change rate is greater than the third threshold, it indicates that the target changes a lane. In this case, the measured noise is increased. Therefore, by performing the foregoing steps, a corresponding measurement matrix that exists when the target changes a lane can be considered, to further improve target tracking accuracy.

In an optional design, the moving state change parameter includes:

an average value of a normalized innovation squared NIS parameter corresponding to the at least one target road geometry; or
curvature of a historical moving track of the target or a degree of change of the curvature.

In an optional design, when the moving state change parameter of the target is the average value of the NIS parameter, and the moving state change parameter of the target is greater than a corresponding threshold, the comparison result indicates that a degree of change of a curvature or a degree of change of a curvature change rate of the target road geometry at the target location needs to be determined; or
when the moving state change parameter of the target is the curvature of the historical moving track of the target or the degree of change of the curvature, and the moving state change parameter of the target is less than a product of a preset positive number and curvature or a curvature change rate of a moving track of the target at a current moment, the comparison result indicates that a degree of change of a curvature or a degree of change of a curvature change rate of the target road geometry at the target location needs to be determined.

According to a second aspect, an embodiment of this application provides a road constraint determining apparatus, including:
at least one processing module.

The at least one processing module is configured to determine a moving state of a target based on detection information of the target.

The at least one processing module is further configured to: determine, based on the detection information of the target, at least one road geometry of a road on which the target is located, where each of the at least one road geometry is represented by using at least one piece of information; and determine a road constraint of the target based on the at least one road geometry and the moving state of the target, where the road constraint includes at least one of a road direction constraint and a road width constraint.

In an optional design, the at least one processing module is further configured to determine at least one target road geometry in the at least one road geometry; and
the at least one processing module is specifically configured to determine the road constraint of the target based on the at least one target road geometry and the moving state of the target.

In an optional design, the at least one processing module is specifically configured to perform the following steps for each of the at least one road geometry:

determining a tangent direction angle of the road geometry at a first location, where the tangent direction angle is an included angle between a tangent line of the road geometry at the first location and a radial direction;
obtaining a tangent direction angle at a target location of the target based on a lateral velocity and a radial velocity at the target location of the target, where a distance between the target location of the target and the first location falls within a first distance range; and
determining the road geometry as the target road geometry if an absolute value of a difference between the tangent direction angle at the first location and the tangent direction angle at the target location is less than a first threshold.

In an optional design, the at least one processing module is specifically configured to perform the following steps for each of the at least one road geometry:
determining the road geometry as the target road geometry if a distance between the target and the road geometry falls within a second distance range.

In an optional design, the at least one processing module is specifically configured to perform the following steps for each of the at least one road geometry:

obtaining a distance between the target and the road geometry; and
determining, based on a quantity of the at least one road geometry, that Num road geometries at a smallest distance is the at least one target road geometry, where Num is a positive integer not less than 1.

In an optional design, the at least one processing module is specifically configured to: determine at least one second location respectively located in the at least one target road geometry, where the at least one second location is a location closest to the target in at least one first target road geometry, and the first target road geometry is a target road geometry in which the second location is located; and

determine the road direction constraint of the target based on a confidence level of the at least one target road geometry and a tangent direction angle of the at least one target road geometry at the at least one second location.

In an optional design, the confidence level of the target road geometry is a confidence level of a road parameter of the target road geometry; or

the confidence level of the target road geometry is a confidence level of the tangent direction angle of the target road geometry at the second location.

In an optional design, when the confidence level of the target road geometry is the confidence level of the road parameter of the target road geometry, the at least one processing module is further configured to determine the confidence level of the road parameter of the target road geometry based on a variance or a standard deviation of the road parameter of the target road geometry, where the road parameter is at least one piece of information used to represent the target road geometry; or

when the confidence level of the target road geometry is the confidence level of the tangent direction angle of the target road geometry at the second location, the at least one processing module is further configured to determine the confidence level of the tangent direction angle of the target road geometry at the second location based on a variance or a standard deviation of the tangent direction angle of the target road geometry at the second location.

In an optional design, the at least one processing module is specifically configured to: determine, based on the confidence level of the target road geometry, a weight value that is of the tangent direction angle of the at least one target road geometry at the at least one second location and that exists during fusion; and

determine, based on the weight value, that a fusion result obtained after fusion is performed on the tangent direction angle is the road direction constraint of the target.

In an optional design, the at least one processing module is specifically configured to determine that the tangent direction angle at the second location is the road direction constraint of the target, where the second location is a location closest to the target in a second target road geometry, and the second target road geometry is a target road geometry with a highest confidence level in the at least one target road geometry.

In an optional design, the at least one processing module is specifically configured to determine that a tangent direction angle at a third location is the road direction constraint of the target, where the third location is a location closest to the target in a third target road geometry, and the third target road geometry is a target road geometry closest to the target in the at least one target road geometry.

In an optional design, the at least one processing module is specifically configured to: obtain a straight line that passes through a target location of the target and that is perpendicular to a fourth target road geometry, where the fourth target road geometry is two target road geometries closest to the target that are respectively located on two sides of the target; and

determine that a distance between two points of intersection is the road width constraint of the target, where the two points of intersection are two points of intersection of the straight line and the fourth target road geometry.

In an optional design, the at least one processing module is specifically configured to determine at least one distance between the target and the at least one target road geometry, where the at least one distance is the road width constraint of the target; or

the at least one processing module is specifically configured to: determine at least one distance between the target and the at least one target road geometry, and determine that a largest value or a smallest value of the at least one distance is the road width constraint of the target; or

the at least one processing module is specifically configured to: determine a distance between the target and the at least one target road geometry, and determine an average value of the at least one distance as the road width constraint of the target.

In an optional design, the at least one processing module is further configured to: determine a measurement matrix including the road direction constraint; and

determine a confidence level of the road direction constraint in the measurement matrix based on the road width constraint.

In an optional design, the at least one processing module is specifically configured to: determine, based on a mapping relationship between the road width constraint and measured noise and the road width constraint, measured noise corresponding to the target; and

determine the confidence level of the road direction constraint in the measurement matrix based on a mapping relationship between the measured noise and the confidence level of the road direction constraint in the measurement matrix and the measured noise corresponding to the target.

In an optional design, the at least one processing module is further configured to: after determining, based on the mapping relationship between the road width constraint and the measured noise and the road width constraint, the measured noise corresponding to the target, determine a moving state change parameter of the target based on the moving state of the target;

when a comparison result of the moving state change parameter of the target and a corresponding threshold indicates that a degree of change of a curvature or a degree of change of a curvature change rate of the target road geometry at a fourth location needs to be determined, determine the degree of change of the curvature or the degree of change of the curvature change rate of the target road geometry at the fourth location, where the fourth location is a location that is located in the target road geometry and whose distance from the target falls within a third distance range; and when the degree of change of the curvature or the degree of change of the curvature change rate is greater than a third threshold, increase the measured noise corresponding to the target; and

the determining the confidence level of the road direction constraint in the measurement matrix based on a mapping relationship between the measured noise and the confidence level of the road direction constraint in the measurement matrix and the measured noise corresponding to the target includes:

determining the confidence level of the road direction constraint in the measurement matrix based on the increased measured noise and the mapping relationship between the measured noise and the confidence level of the road direction constraint in the measurement matrix.

According to a third aspect, an embodiment of this application provides a road constraint determining apparatus, including:

at least one processor and a memory.

The memory is configured to store program instructions.

The at least one processor is configured to invoke and execute the program instructions stored in the memory. When the processor executes the program instructions, the apparatus is enabled to perform the method according to the first aspect.

According to a fourth aspect, an embodiment of this application provides a computer-readable storage medium.

The computer-readable storage medium stores instructions, and when the instructions are run on a computer, the computer is enabled to perform the method according to the first aspect.

According to a fifth aspect, an embodiment of this application provides a computer program product including instructions. When the computer program product runs on an electronic device, the electronic device is enabled to perform the method according to the first aspect.

In embodiments of this application, the road constraint of the target is determined based on the road geometry and the moving state of the target. The road geometry can reflect a geometric shape of the road on which the target is located. In this case, according to the solution in this application, the road constraint of the target can be determined based on the geometric shape of the road on which the target is located and the moving state of the target. However, when the road constraint is determined in the conventional technology, because a considered road scenario is simple, the road is represented only by using a series of points and a road segment connecting the points. Therefore, in comparison with the conventional technology, in the solution in the embodiments of this application, the road constraint determining accuracy can be improved, and the target tracking accuracy can be further improved.

**BRIEF DESCRIPTION OF DRAWINGS**

To describe the technical solutions in this application more clearly, the following briefly describes the accompanying drawings required for describing the embodiments. Apparently, a person of ordinary skill in the art may still derive other drawings from these accompanying drawings without creative efforts.

FIG. 1 is a schematic diagram of determining a road constraint in the conventional technology;
FIG. 2 is a schematic diagram of an operating procedure of a road constraint determining method according to an embodiment of this application;
FIG. 3 is a schematic diagram of an application scenario of a road constraint determining method according to an embodiment of this application;
FIG. 4 is a schematic diagram of an operating procedure of determining a target road geometry in a road constraint determining method according to an embodiment of this application;
FIG. 5 is a schematic diagram of an operating procedure of determining a road direction constraint in a road constraint determining method according to an embodiment of this application;
FIG. 6 is a schematic diagram of an application scenario of another road constraint determining method according to an embodiment of this application;
FIG. 7 is a schematic diagram of an operating procedure of another road constraint determining method according to an embodiment of this application;

FIG. 8 is a schematic diagram of a structure of a road constraint determining apparatus according to an embodiment of this application;

FIG. 9 is a schematic diagram of a structure of another road constraint determining apparatus according to an embodiment of this application;

FIG. 10 is a schematic diagram of a structure of a tracking device according to an embodiment of this application;

FIG. 11 is a schematic diagram of a structure of another tracking device according to an embodiment of this application;

FIG. 12 is a schematic diagram of a structure of still another tracking device according to an embodiment of this application; and

FIG. 13 is a schematic diagram of a structure of yet another tracking device according to an embodiment of this application.

## DESCRIPTION OF EMBODIMENTS

To resolve a problem that there is low accuracy of a road constraint obtained during tracking of a target in the conventional technology, embodiments of this application disclose a road constraint determining method and apparatus.

The road constraint determining method disclosed in the embodiments of this application is usually applied to a tracking device. A processor is disposed in the tracking device, and the processor may determine, according to the solutions disclosed in the embodiments of this application, a road constraint of a road on which a target is located.

The processor needs to apply detection information when determining the road constraint. The detection information may be obtained by using a sensor. The sensor usually includes radar and/or an imaging apparatus. The sensor may be connected to the processor in the tracking device, and transmit the detection information to the processor, so that the processor determines the road constraint based on the received detection information according to the solutions disclosed in the embodiments of this application. The sensor may be disposed in the tracking device. Alternatively, the sensor may be a device independent of the tracking device.

The tracking device may be disposed at a plurality of locations, and the tracking device may be a static device mounted at a traffic intersection or a roadside of an expressway. Alternatively, the tracking device may be mounted on an object in a moving state. For example, the tracking device may be mounted in a vehicle in motion. In this case, the tracking device mounted in the vehicle may further obtain the road constraint of the target in a vehicle moving process.

In an example, the tracking device may be a vehicle-mounted processor in the vehicle, and the sensor includes vehicle-mounted radar in the vehicle and an imaging apparatus in the vehicle. When the vehicle moves on a road, the vehicle-mounted device may obtain detection information transmitted by the vehicle-mounted radar and the imaging apparatus, and determine a road constraint of a target on the road according to the solutions disclosed in the embodiments of this application.

Further, when the road constraint of the road on which the target is located is obtained, the target may be an object in a static state, or may be an object in the moving state. This is not limited in the embodiments of this application.

The following describes the road constraint determining method disclosed in the embodiments of this application with reference to specific accompanying drawings and an operating procedure.

Referring to a schematic diagram of an operating procedure shown in FIG. 2, the road constraint determining method disclosed in an embodiment of this application includes the following steps.

Step S11: Determine a moving state of a target based on detection information of the target.

The detection information of the target may be obtained by using at least one sensor. The at least one sensor includes radar and/or an imaging apparatus. The radar may be at least one of a plurality of types of radar such as laser radar, millimeter-wave radar, or ultrasonic radar, and the imaging apparatus may be at least one of a camera, an infrared sensor, or a video camera. This is not limited in this embodiment of this application.

For example, the millimeter-wave radar can detect the target by using an electromagnetic wave. Specifically, the millimeter-wave radar may transmit the electromagnetic wave to the target, receive an echo fed back after the electromagnetic wave gets in contact with the target, and obtain a distance of the target from an emission point of the electromagnetic wave, a velocity, and an azimuth based on the echo. In this case, the detection information includes information such as a distance, an azimuth, and a radial velocity that are of the target detected by the millimeter-wave radar and that are relative to the millimeter-wave radar.

Correspondingly, the detection information of the target may include a plurality of types of information, for example, may include information that can be detected by the radar, or may include image information captured by the imaging apparatus.

In this embodiment of this application, the moving state of the target includes at least a target location of the target. Further, the moving state of the target may further include the target location and a velocity of the target. The moving state of the target may be determined based on the detection information of the target.

Step S12: Determine, based on the detection information of the target, at least one road geometry of a road on which the target is located, where each of the at least one road geometry is represented by using at least one piece of information.

The road geometry is a geometric shape of the road, and the road geometry is represented by using at least one piece of information such as an orientation of the road, and a degree of curvature (curvature), a bending direction, and a length that are of the road. It should be noted herein that the road geometry may also be represented by using other information. This is not specifically limited in this application.

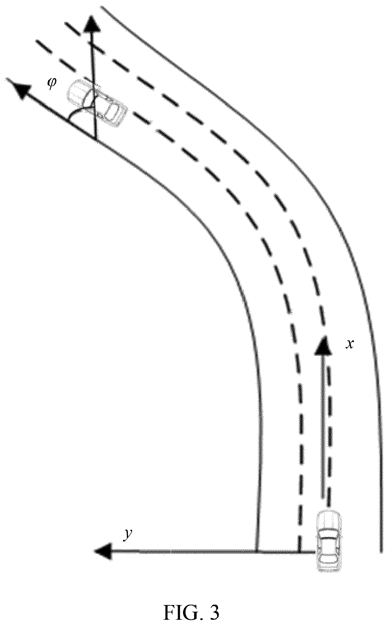

Referring to a schematic diagram of a scenario shown in FIG. 3, a region in which the target may move may be determined based on a road edge, a road guardrail, or a lane line of the road on which the target is located. In FIG. 3, a solid line represents the road edge or road guardrail, and a dashed line represents the lane line. In this embodiment of this application, one road geometry corresponds to any geometric shape of the road edge, the road guardrail, and the lane line. For example, a road geometry may be a road geometry of the road edge of the road on which the target is located, and correspondingly, information used to represent the road geometry is at least one piece of information such as an orientation, curvature, a bending direction, and a length of the road edge; another road geometry may be a road geometry of the lane line of the road on which the target is located, and correspondingly, information used to represent the road geometry is at least one piece of information such as an orientation, curvature, a bending direction, and a length of the lane line.

In a road geometry determining process in this application, the millimeter-wave radar may transmit an electromagnetic wave to the road edge or road guardrail, receive an echo fed back after the electromagnetic wave gets in contact with the road edge or road guardrail, obtain corresponding detection information based on the echo, and transmit the detection information to a processor disposed in a tracking device, so that the processor disposed in the tracking device determines the road geometry of the road edge or a road geometry of the road guardrail based on the received detection information. In this case, the detection information detected by the millimeter-wave radar includes information such as a distance or an azimuth of the road edge or road guardrail relative to the millimeter-wave radar.

In this embodiment of this application, a road edge model and/or a road guardrail model may be disposed. The road edge model and/or the road guardrail model include/includes a parameter of the road edge model and/or a parameter of the road guardrail, and the parameter is information representing a road geometry. Then, a specific value of each parameter is determined based on the detection information, and the value is substituted into the corresponding road edge model and/or the road guardrail model, to obtain a road edge geometry and/or a road guardrail geometry.

In a feasible implementation, that road edge model may be express by using any one of Formula (1) to Formula (4). In addition, because the road guardrail is usually disposed along the road edge, the road guardrail model may also be expressed by using any one of Formula (1) to Formula (4). Formula (1) to Formula (4) are respectively as follows:

$$y(x) = y_0^{R,i} + \phi_0^{Ri} x + C_0^{Ri} \frac{x^2}{2} + C_1^{Ri} \frac{x^3}{6} \qquad \text{Formula (1);}$$

$$y(x) = y_0^{R,i} + C_0^{Ri} \frac{x^2}{2} + C_1^{Ri} \frac{x^3}{6} \qquad \text{Formula (2);}$$

$$y(x) = y_0^{R,i} + \phi_0^{Ri} x + C_0^{Ri} \frac{x^2}{2} \qquad \text{Formula (3);}$$

and

$$y(x) = y_0^{R,i} + \phi_0^{Ri} x \qquad \text{Formula (4).}$$

In a coordinate system corresponding to Formula (1) to Formula (4), x represents a radial distance between a location of the tracking device and the road edge or road guardrail, and y represents a lateral distance between the location of the tracking device and the road edge or road guardrail. In addition, an origin of the coordinate system may be coordinates of a location of the radar, or an origin of the coordinate system may be another location. The relative location between the another location and the radar is fixed. In addition, when the radar moves, the origin of the coordinate system may also change accordingly. For example, when the radar is vehicle-mounted radar, the origin of the coordinate system may be a location of a headlamp, a central location of an axle, or the like. In addition, as the vehicle moves, the origin of the coordinate system also changes accordingly.

In addition, in Formula (1) to Formula (4), R represents that each parameter in the formulas is determined based on detection information fed back by the radar (radar); i represents a number of the road edge or road guardrail; y(x) represents an expression of an $i^{th}$ road edge or road guardrail determined based on the detection information fed back by the radar; $y_0^{R,i}$ represents a lateral offset of the $i^{th}$ road edge or road guardrail relative to the tracking device when x=0, where the lateral offset is a lateral displacement of the target relative to the road edge or road guardrail in the coordinate system; $\phi_0^{Ri}$ represents a heading of the $i^{th}$ road edge or road guardrail when x=0, where the heading is an included angle between the road edge or road guardrail and a longitudinal axis of the coordinate system in the coordinate system; $C_0^{Ri}$ represents average curvature of the $i^{th}$ road edge or road guardrail; and $C_1^{Ri}$ represents an average value of a curvature change rate of the $i^{th}$ road edge or road guardrail. The processor of the tracking device can determine specific values of $y_0^{R,i}$, $\phi_0^{Ri}$, $C_0^{Ri}$, and $C_1^{Ri}$ based on the detection information fed back by the radar, to obtain Formula (1) to Formula (4). Herein, $y_0^{R,i}$, $\phi_0^{Ri}$, $C_0^{Ri}$, and $C_1^{Ri}$ are information used to represent the road edge geometry or the road guardrail geometry.

Formula (3) is more applicable to description of a scenario in which there is large road curvature, for example, a semicircular road, but Formula (4) is more applicable to description of a scenario in which there is small road curvature, for example, a straight road. Curvature of a scenario to which Formula (1) and Formula (2) are applicable is between curvature of a scenario to which Formula (3) is applicable and curvature of a scenario to which Formula (4) is applicable, and Formula (1) and Formula (2) are more applicable to description of a road whose curvature falls between curvature of the straight road and curvature of the semicircular road. The processor executing this embodiment of this application may select a corresponding formula based on a road condition of the road on which the target is located. Alternatively, the road edge model or the road guardrail model may be described by using one or a combination of Formula (1) to Formula (4). For example, different formulas are used to represent segments of the road that have different curvature.

Certainly, the road edge and the road guardrail model may alternatively be represented by using another formula. This is not limited in this embodiment of this application.

In addition, the sensor usually further includes the imaging apparatus. The imaging apparatus may be a camera, an infrared sensor, a camera, or the like. This is not limited in this embodiment of this application.

By using the imaging apparatus, a road image can be obtained, the road image includes a lane line, and the lane line is usually marked in a special color. For example, the lane line is usually marked in yellow or white. In this case, after receiving the road image transmitted by the imaging apparatus, the tracking apparatus may extract edge information in the road image, and then determine, with reference to a color feature and the edge information, whether the road image includes the lane line. Certainly, the road image obtained by the imaging apparatus may further include the road edge and/or road guardrail, and the like, and the road edge and/or road guardrail included in the road image may also be determined by performing image processing on the road image. The road edge model and/or the road guardrail model are/is determined based on any one of Formula (1) to Formula (4).

When it is determined that the road image includes the lane line, a specific value of each parameter in the lane line model may be determined based on the detection information, and the value is substituted into the corresponding lane line model, to obtain a lane line geometry. In this case, the detection information transmitted by the sensor is the road image captured by the imaging apparatus.

In a feasible implementation, the lane line model may be represented by using the following formulas:

$$y(x) = y_0^{V,s} + \phi_0^{Vs}x + C_0^{Vs}\frac{x^2}{2} + C_1^{Vs}\frac{x^3}{6} \qquad \text{Formula (5);}$$

$$y(x) = y_0^{V,s} + C_0^{Vs}\frac{x^2}{2} + C_1^{Vs}\frac{x^3}{6} \qquad \text{Formula (6);}$$

$$y(x) = y_0^{V,s} + \phi_0^{Vs}x + C_0^{Vs}\frac{x^2}{2} \qquad \text{Formula (7);}$$

and

$$y(x) = y_0^{V,s} + \phi_0^{Vs}x \qquad \text{Formula (8).}$$

In a coordinate system corresponding to Formula (5) to Formula (8), x represents the radial distance between the location of the tracking device and the road edge or the road guardrail, and represents the lateral distance between the location of the tracking device and the road edge or the road guardrail. In addition, an origin of the coordinate system may be coordinates of a location of an imaging location, or an origin of the coordinate system may be another location. The relative location between the another location and the imaging location is fixed. In addition, when the imaging location moves, the origin of the coordinate system may also change accordingly. For example, when the imaging location is a vehicle-mounted imaging location, the origin of the coordinate system may be the location of the headlamp, the central location of the axle, or the like. In addition, as the vehicle moves, the origin of the coordinate system also changes accordingly.

In addition, in Formula (5) to Formula (8), V represents that each parameter in the formula is determined based on detection information fed back by the imaging apparatus; s represents a number of the lane line; y(x) represents an expression of an $s^{th}$ lane line determined based on the detection information fed back by the imaging apparatus; $y_0^{V,s}$ represents a lateral offset of the $s^{th}$ lane line relative to the tracking device when x=0; $\phi_0^{Vs}$ represents a heading of the $s^{th}$ lane line when x=0; $C_0^{Vs}$ indicates average curvature of the $s^{th}$ lane line; and $C_1^{Vs}$ represents an average value of a curvature change rate of the $s^{th}$ lane line. Specific values of $y_0^{V,s}$, $\phi_0^{Vs}$, $C_0^{Vs}$, and $C_1^{Vs}$ can be determined based on the detection information fed back by the imaging apparatus, to obtain Formula (5) to Formula (8). Herein, $y_0^{V,s}$, $\phi_0^{Vs}$, $C_0^{Vs}$, and $C_1^{Vs}$ are information used to represent the lane line geometry.

Formula (7) is more applicable to description of a scenario in which there is large road curvature, for example, a semicircular road, but Formula (8) is more applicable to description of a scenario in which there is small road curvature, for example, a straight road. Curvature of a scenario to which Formula (5) and Formula (6) are applicable is between curvature of a scenario to which Formula (7) is applicable and curvature of a scenario to which Formula (8) is applicable, and Formula (5) and Formula (6) are more applicable to description of a road whose curvature falls between curvature of the straight road and curvature of the semicircular road. The processor executing this embodiment of this application may select a corresponding formula based on the road condition of the road on which the target is located. Alternatively, the lane line model may be described by using one or a combination of Formula (5) to Formula (8). For example, different formulas are used to represent segments of the road that have different curvature.

A road geometry model may be obtained based on Formula (1) to Formula (8). In addition, to further improve accuracy of the road geometry, prior information and the detection information may be both used to determine the road geometry.

The prior information may be a pre-obtained map, and the map may be pre-obtained by using a global positioning system (global positioning system, GPS) or through simultaneous localization and mapping (simultaneous localization and mapping, SLAM). When the road geometry is determined with reference to the prior information, matching and comparison are performed on the detection information transmitted by the sensor and the pre-obtained map, to determine whether environment information represented by the detection information transmitted by the sensor is consistent with environment information displayed on the map. If the environment information represented by the detection information transmitted by the sensor is consistent with the environment information displayed on the map, the road geometry model is determined based on Formula (5) to Formula (8).

Step S13: Determine a road constraint of the target based on the at least one road geometry and the moving state of the target, where the road constraint includes at least one of a road direction constraint and a road width constraint.

Refer to FIG. 3. The road direction constraint of the target may be determined based on parameter information such as a tangent direction angle of the road geometry at a specific location. The tangent direction angle at a specific location is an included angle between a tangent line at the location and a radial direction. In addition, the road width constraint of the target may be determined based on parameter information such as a distance between the target and the road geometry.

In this embodiment of this application, the road constraint of the target is determined based on the road geometry and the moving state of the target. The road geometry can reflect the geometric shape of the road on which the target is located. In this case, according to the solution in this application, the road constraint of the target can be determined based on the geometric shape of the road on which the target is located and the moving state of the target. However, when a road constraint is determined in the conventional technology, because a considered road scenario is simple, a road is represented only by using a series of points and a road segment connecting the points. Therefore, in comparison with the conventional technology, in the solution in the embodiments of this application, road constraint determining accuracy can be improved, and target tracking accuracy can be further improved.

Further, in this embodiment of this application, the method further includes:
determining at least one target road geometry in the at least one road geometry.

In this case, the determining a road constraint of the target based on the at least one road geometry and the moving state of the target includes:
determining the road constraint of the target based on the at least one target road geometry and the moving state of the target.

In this embodiment of this application, a plurality of road geometries can usually be obtained. However, a deviation of some road geometries from a moving track of the target may be large. If the road constraint is determined based on a road geometry with a large deviation, accuracy of the road constraint is reduced.

For example, when the road geometry is determined based on the detection information transmitted by the radar, and the target is a vehicle on the road, an echo is usually generated when the electromagnetic wave generated by the radar gets in contact with a building on a side of the road or another vehicle on the road. In this case, some road geometries determined based on the detection information fed back by the radar may have a large deviation. In addition, when the road geometry is determined based on the detection information transmitted by the imaging apparatus, an error may occur in an image processing process, and consequently, the determined some road geometries are also inaccurate. Therefore, the target road geometry in the road geometry needs to be determined by performing the foregoing operation, and the target road geometry is a road geometry used to determine the road constraint subsequently. In this case, the road constraint is determined based on the target road geometry, so that the road constraint determining accuracy can be further improved.

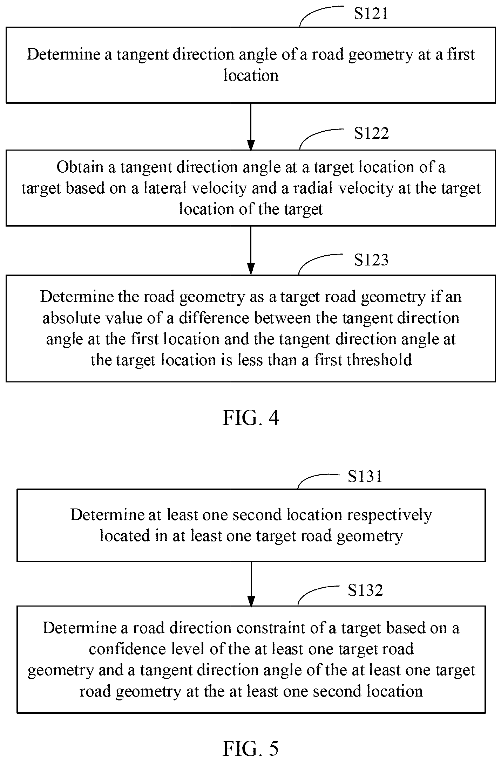

In this embodiment of this application, the target road geometry may be determined in a plurality of manners. In a first feasible implementation, when the moving state of the target includes a location of the target and the velocity of the target, referring to a schematic diagram of an operating procedure shown in FIG. 4, for each of the at least one road geometry, the at least one target road geometry in the at least one road geometry may be determined by performing the following steps.

Step S121: Determine a tangent direction angle of the road geometry at a first location, where the tangent direction angle is an included angle between a tangent line of the road geometry at the first location and the radial direction.

When coordinates of the first location are $(x_1, y_1)$, the tangent direction angle may be determined based on the following formula:

$$\phi_1 = \tan \varphi_1 = \phi_0 + C_0 x_1 + C_1 \frac{x_1^2}{2} \qquad \text{Formula (9).}$$

Herein, $\varphi_1$ is a tangent direction angle of the road geometry at the first location; $x_1$ is an x-axis coordinate of the first location in a ground coordinate system; $\phi_0$ is a heading of the road geometry when x=0; $C_0$ represents average curvature of the road geometry; $C_1$ represents an average value of a curvature change rate of the road geometry; and $\phi_1$ is a heading of the road geometry at the first location.

After $\phi_1$ is determined based on Formula (9), the tangent direction angle may be determined based on the following formula:

$$\varphi_1 = arc \tan(\phi_1) \qquad \text{Formula (10).}$$

Step S122: Obtain a tangent direction angle at the target location of the target based on a lateral velocity and a radial velocity at the target location of the target, where a distance between the target location of the target and the first location falls within a first distance range.

When coordinates of the target are $(x_2, y_2)$, a tangent direction angle at the target location $(x_2, y_2)$ of the target may be determined based on the following formula:

$$\varphi_2 = \arctan(\frac{vy_2}{vx_2}) \qquad \text{Formula (11).}$$

Herein, $\varphi_2$ is a tangent direction angle at a location of the target; $vy_2$ is a lateral velocity at the location of the target; $vx_2$ is a radial velocity at the location of the target; and the location of the target is the target location.

The lateral velocity and the radial velocity at the target location of the target, namely, $vy_2$ and $vx_2$, can be determined based on the detection information transmitted by the radar, so that the tangent direction angle at the target location of the target can be determined based on Formula (11).

The first distance range is a preset distance range. A location of the target in a coordinate system can be determined based on the detection information of the radar or the imaging apparatus. Then, the distance between the target location of the target and the first location may be calculated based on the location of the target in the coordinate system and a location of the first location in the coordinate system. When the distance between the target location of the target and the first location falls within the first distance range, it indicates that the target location of the target is close to the first location.

Step S123: Determine the road geometry as the target road geometry if an absolute value of a difference between the tangent direction angle at the first location and the tangent direction angle at the target location is less than a first threshold.

In other words, the road geometry may be determined as the target road geometry when the difference between the tangent direction angle at the first location and the tangent direction angle at the location of the target satisfies the following formula:

$$|\varphi_1 - \varphi_2| < thresh \qquad\qquad \text{Formula (12).}$$

In the foregoing formula, *thresh* represents the first threshold.

When the absolute value of the difference is less than the first threshold, it indicates that when the road geometry is at the first location, there is a small difference between the tangent direction angle of the road geometry at the first location and the tangent direction angle at the location of the target. Therefore, it can be determined that a deviation of the road geometry from the moving track of the target is small, in other words, the road geometry basically conforms to the moving track of the target, so that the road constraint of the target can be determined based on the road geometry, and correspondingly, the road geometry can be determined as the target road geometry.

In addition, when the absolute value of the difference is not less than the first threshold, it indicates that there is a large deviation of the road geometry from the moving track of the target, and the road geometry does not conform to the moving track of the target. In this case, to avoid affecting the road constraint determining accuracy, the road constraint is usually not determined based on the road geometry. In other words, it is determined that the road geometry is not the target road geometry.

In the foregoing description and FIG. 4, the tangent direction angle of the road geometry at the first location is first determined, and then the tangent direction angle at the target location of the target is determined. However, in an actual operation process, a time sequence of steps of determining the two tangent direction angles is not strictly limited. The tangent direction angle at the target location of the target may be determined first, and then the tangent direction angle of the road geometry at the first location may be determined. Alternatively, the tangent direction angle of the road geometry at the first location and the tangent direction angle at the target location of the target are determined simultaneously. This is not limited in this embodiment of this application.

In a second feasible implementation, for each of the at least one road geometry, at least one target road geometry in the at least one road geometry may be determined by performing the following step:
determining the road geometry as the target road geometry if a distance between the target and the road geometry falls within a second distance range.

The second distance range is a preset distance range.

In the foregoing manner, the distance between the target and the road geometry is first determined, and when the distance between the target and the road geometry falls within the second distance range, the road geometry may be determined as the target road geometry.

When the target is located in the road geometry, the distance between the target and the road geometry is zero. A location of the target in the coordinate system can be determined based on the detection information of the radar or the imaging apparatus. Then, when the location of the target in the coordinate system conforms to the road geometry model (for example, Formula (1) to Formula (8)), it can be determined that the target is located in the road geometry.

In addition, when the target is not located in the road geometry, the distance between the target and the road geometry is a minimum distance between the target and the road geometry. Specifically, when the distance between the target and the road geometry is determined, a corresponding schematic diagram of the road geometry may be drawn based on a formula (for example, Formula (1) to Formula (8)) corresponding to the road geometry. The schematic diagram of the road geometry is usually a curve, and is used to represent a road edge, a road guardrail, or a lane line. Then, a connection line segment between the target location of the target and each point in the curve may be obtained. A length of a shortest connection line segment is the distance between the target and the road geometry.

When the distance between the target and the road geometry falls within the second distance range, it indicates that the target is located in the road geometry, or the target is close to the road geometry. Therefore, the road geometry may be determined as the target road geometry.

In a third feasible implementation, for each of the at least one road geometry, the determining at least one target road geometry in the at least one road geometry includes:

obtaining the distance between the target and the road geometry; and
determining, based on a quantity of the at least one road geometry, that Num road geometries at a smallest distance is the at least one target road geometry, where Num is a positive integer not less than 1.

When the quantity of the at least one road geometry is 1, Num is 1. In addition, when the quantity of road geometries is greater than 1, Num may be determined as a positive integer not less than 2. For example, Num may be set to 2. In this case, it is determined that two road geometries closest to the target in all the road geometries are the target road geometry.

Alternatively, in another feasible implementation, a fixed value Num1 may be further set. When the quantity of road geometries is greater than 1, Num is a difference between the quantity of road geometries and Num1. In this case, a larger quantity of road geometries correspondingly indicates a larger quantity of target road geometries, so that when a large quantity of road geometries are obtained, the road constraint can be determined based on the large quantity of target road geometries. If there is a small quantity of target road geometries, when there is a target road geometry with a large error, the determined road constraint has a large error. Therefore, when the road constraint is determined based on the large quantity of target road geometries, impact of the target road geometry with a large error can be reduced, and the road constraint determining accuracy is improved.

In the foregoing manner, the target road geometry can be obtained from all the road geometries, so that the road constraint of the target can be subsequently determined based on the target road geometry. Because a deviation of the target road geometry from the moving track of the target falls within a specific range, the road constraint of the target can be determined based on the target road geometry, so that accuracy of the determined road constraint can be improved.

In this embodiment of this application, the road direction constraint may be determined in a plurality of manners. In a feasible implementation, referring to a schematic diagram of an operating procedure shown in FIG. 5, the determining a road direction constraint of the target based on the at least one target road geometry and the moving state of the target includes:

Step S131: Determine at least one second location respectively located in the at least one target road geometry, where the at least one second location is a location closest to the target in at least one first target road geometry, and the first target road geometry is a target road geometry in which the second location is located.

Coordinates $(x_2, y_2)$ of a location of the target in the coordinate system may be determined based on the detection information transmitted by the radar or the imaging apparatus, and then, a second location $(x_3, y_3)$ closest to the target in the target road geometry may be determined based on the coordinates $(x_2, y_2)$ of the location of the target in the coordinate system and the target road geometry.

Step S132: Determine the road direction constraint of the target based on a confidence level of the at least one target road geometry and a tangent direction angle of the at least one target road geometry at the at least one second location.

Specifically, a tangent direction angle of the target road geometry at the second location $(x_3, y_3)$ may be determined based on Formula (13) or Formula (14):

$$\phi_3 = \tan \varphi_3 = \phi_0 + C_0 x_3 + C_1 \frac{x_3^2}{2} \qquad \text{Formula (13);}$$

and

$$\phi_3 = \tan \varphi_3 = C_0 x_3 + C_1 \frac{x_3^2}{2} \qquad \text{Formula (14).}$$

In Formula (13) and Formula (14), $\phi_3$ is a heading of the target road geometry at the second location $(x_3, y_3)$; $\varphi_3$ is a tangent direction angle of the target road geometry at the second location $(x_3, y_3)$; $\phi_0$ is a heading of the target road geometry when x=0; $C_0$ represents average curvature of the target road geometry; and $C_1$ represents an average value of a curvature change rate of the target road geometry.

The tracking device can determine $\phi_0$, $C_0$, and $C_1$ based on the detection information transmitted by the radar or the imaging apparatus, and can determine the tangent direction angle of the target road geometry at the second location $(x_3, y_3)$ based on Formula (13) and Formula (14).

After $\phi_3$ is determined based on Formula (13) or Formula (14), a tangent direction angle of the target in the target road geometry may be determined based on the following formula:

$$\varphi_3 = arc \tan(\phi_3) \qquad \text{Formula (15).}$$

In addition, the confidence level of the target road geometry is a confidence level of a road parameter of the target road geometry; or the confidence level of the target road geometry is a confidence level of the tangent direction angle of the target road geometry at the second location.

When the confidence level of the target road geometry is the confidence level of the road parameter of the target road geometry, this embodiment of this application further includes the following step: determining the confidence level of the road parameter of the target road geometry based on a variance or a standard deviation of the road parameter of the target road geometry. The road parameter is at least one piece of information used to represent the target road geometry. In other words, the road parameter may be at least one of parameters such as an orientation, curvature, a curvature change rate, and a length of the road.

To determine the confidence level of the road parameter of the target road geometry, a variance or a standard deviation of a road parameter of each target road geometry may be obtained. The variance or the standard deviation is inversely proportional to the confidence level of the road parameter of the target road geometry. In other words, a lower confidence level of the road parameter of the target road geometry is determined based on a larger variance or standard deviation, and a confidence level of a road parameter of each target road geometry may be determined accordingly. Specifically, in this embodiment of this application, a mapping relationship between the variance or the standard deviation of the road parameter and the confidence level of the road parameter may be preset. After the variance or the standard deviation of the road parameter is determined, the confidence level of the road parameter of the target road geometry may be determined by querying the mapping relationship.

Alternatively, when the confidence level of the target road geometry is the confidence level of the tangent direction angle of the target road geometry at the second location, the following step may be further included: determining the confidence level of the tangent direction angle of the target road geometry at the second location based on a variance or a standard deviation of the tangent direction angle of the target road geometry at the second location.

To be specific, to determine a confidence level of a tangent direction angle $\varphi_3$ of each target road geometry at the location $(x_3, y_3)$, a variance or a standard deviation of the tangent direction angle $\varphi_3$ of each target road geometry at the second location $(x_3, y_3)$ may be obtained, and then, a confidence level of the tangent direction angle $\varphi_3$ of each target road geometry at the second location $(x_3, y_3)$ is determined based on the variance or the standard deviation. The variance or the standard deviation of the tangent direction angle $\varphi_3$ is inversely proportional to the confidence level of the tangent direction angle $\varphi_3$. In other words, a lower confidence level of the tangent direction angle $\varphi_3$ corresponding to the target road geometry is determined based on a larger variance or standard deviation of the tangent direction angle $\varphi_3$, and the confidence level of the tangent direction angle $\varphi_3$ corresponding to each target road geometry may be determined accordingly. Specifically, in this embodiment of this application, a mapping relationship between the variance or the standard deviation of the tangent direction angle and the confidence level of the tangent direction angle at the second location may be preset. After the variance or the standard deviation of the tangent direction angle is determined, the confidence level of the tangent direction angle of the target road geometry at the second location may be determined by querying the mapping relationship.

The determining the road direction constraint of the target based on a confidence level of the at least one target road geometry and a tangent direction angle of the at least one target road geometry at the at least one second location in step S132 may be implemented in a plurality of manners.

In a manner, the determining the road direction constraint of the target based on a confidence level of the at least one target road geometry and a tangent direction angle of the at least one target road geometry at the at least one second location includes:

first determining, based on the confidence level of the target road geometry, a weight value that is of the tangent direction angle of the at least one target road geometry at the at least one second location and that exists during fusion; and

then determining, based on the weight value, that a fusion result obtained after fusion is performed on the tangent direction angle is the road direction constraint of the target.

In this method, a higher confidence level of a target road geometry usually indicates a higher weight value of the target road geometry.

In this embodiment of this application, a weight that is of a tangent direction angle of each target road geometry and that exists during fusion needs to be determined based on a confidence level of the target road geometry, to fuse the tangent direction angle of each target road geometry based on the weight. Usually, a higher confidence level of a target road geometry indicates a higher weight value that is of a tangent direction angle of the target road geometry and that exists during fusion.

The weight that is of the tangent direction angle of each target road geometry and that exists during fusion may be determined in a plurality of manners. In a feasible implementation, a correspondence between a confidence level and a weight value may be preset, to determine the weight value based on the correspondence.

Alternatively, in another feasible implementation, the weight value may be determined based on Formula (16) or Formula (17):

$$w_i = \frac{\delta(\varphi(i))}{\sum_{i=1}^{n} \delta(\varphi(i))}$$  Formula (16);

and

$$w_i = \frac{\delta(\varphi(i)) * h(d_i)}{\sum_{i=1}^{n} \delta(\varphi(i)) * h(d_i)}$$  Formula (17).

In the foregoing formula, $w_i$ represent a weight value of a tangent direction angle of an $i^{th}$ target road geometry at the second location $(x_3, y_3)$; $\varphi(i)$ is the tangent direction angle of the $i^{th}$ target road geometry at the second location $(x_3, y_3)$; $\delta(\varphi(i))$ is a confidence level of the $i^{th}$ target road geometry; $n$ is a quantity of target road geometries; and $h(d_i)$ is a distance between the target and the $i^{th}$ target road geometry. The distance between the target and the target road geometry is a shortest distance of a connection line segment between the target and each point in the target road geometry.

In addition, when the tangent direction angle $\varphi_3$ corresponding to each target road geometry is fused based on the confidence level of each target road geometry, fusion may be performed based on the following formula:

$$\varphi = \sum_{i=1}^{n} w_i * \varphi(i)$$  Formula (18).

Herein, $\varphi$ is a fusion result obtained after fusion is performed on a tangent direction angle $\varphi_1$ corresponding to each target road geometry; $\varphi(i)$ is a tangent direction angle of the $i^{th}$ target road geometry at the location $(x_1, y_1)$; $w_i$ is the weight value of the $i^{th}$ target road geometry; and $n$ is the quantity of target road geometries.

In the foregoing step, the tangent direction angle corresponding to each target road geometry is fused based on the confidence level of the target road geometry, and a result obtained after fusion is used as the road direction constraint of the target road.

In another feasible implementation, the determining the road direction constraint of the target based on a confidence level of the at least one target road geometry and a tangent direction angle of the at least one target road geometry at the at least one second location includes:

determining that the tangent direction angle at the second location is the road direction constraint of the target.

The second location is a location closest to the target in a second target road geometry, and the second target road geometry is a target road geometry with a highest confidence level in the at least one target road geometry. In addition, the confidence level of the target road geometry is a confidence level of a road parameter of the target road geometry; or the confidence level of the target road geometry is a confidence level of the tangent direction angle of the target road geometry at the second location.

In the foregoing implementation, the road direction constraint of the target is determined based on a tangent direction angle of the target road geometry with the highest confidence level at the second location.

Alternatively, in another feasible implementation, the determining the road direction constraint of the target based on a confidence level of the at least one target road geometry and a tangent direction angle of the at least one target road geometry at the at least one second location includes:

determining that a tangent direction angle at a third location is the road direction constraint of the target.

The third location is a location closest to the target in a third target road geometry, and the third target road geometry is a target road geometry closest to the target in the at least one target road geometry.

In the foregoing implementation, the road direction constraint of the target is determined based on the target road geometry closest to the target.

Further, the road direction constraint of the target may be determined in another manner. In this manner, the at least one target road geometry is first fused, to obtain one road geometry obtained after fusion. Then, a location closest to the target in the road geometry obtained after fusion is determined, a tangent direction angle at the location closest to the target is determined, and the tangent direction angle is used as the road direction constraint of the target.

In the foregoing manner, each target road geometry needs to be fused, to obtain the road geometry obtained after fusion. To fuse the at least one target road geometry, a model of each target road geometry may be determined, each parameter in the model is fused based on the confidence level of each target road geometry, to obtain a parameter obtained after fusion, the parameter obtained after fusion is substituted into the model, and the obtained new model is the road geometry obtained after fusion.

For example, when the model of each target road geometry is Formula (1), parameters $y_0^{R,i}$, $\phi_0^{Ri}$, $C_0^{Ri}$, and $C_1^{Ri}$ included in the model of each target road geometry are fused, a parameter obtained after fusion is substituted into Formula (1), and the obtained new model may represent the road geometry obtained after fusion.

According to the foregoing solution, the road direction constraint can be obtained. In comparison with the conventional technology, in this embodiment of this application, the road direction constraint is obtained based on the road geometry, and features such as curvature and a heading of the road on which the target is located are fully considered. Therefore, the obtained road direction constraint is more accurate. Further, the target is tracked based on the road direction constraint obtained in this embodiment of this application, to further improve target tracking accuracy.

In this embodiment of this application, the road width constraint may be represented in a plurality of manners. For example, a width between two target road geometries closest to the target that are respectively located on two sides of the target may be used as the road width constraint of the target; or a distance between the target and the at least one target road geometry may be used as the road width constraint of the target; or a largest value or a smallest value of a distance between the target and the at least one target road geometry is used as the road width constraint of the target; or an average value of a distance between the target and the at least one target road geometry is used as the road width constraint of the target.

In this case, in a feasible manner, the determining a road width constraint of the target based on the at least one target road geometry and the moving state of the target includes the following steps:

first obtaining a straight line that passes through the target location of the target and that is perpendicular to a fourth target road geometry, where the fourth target road geometry is two target road geometries closest to the target that are respectively located on the two sides of the target; and
then determining that a distance between two points of intersection is the road width constraint of the target, where the two points of intersection are two points of intersection of the straight line and the fourth target road geometry.

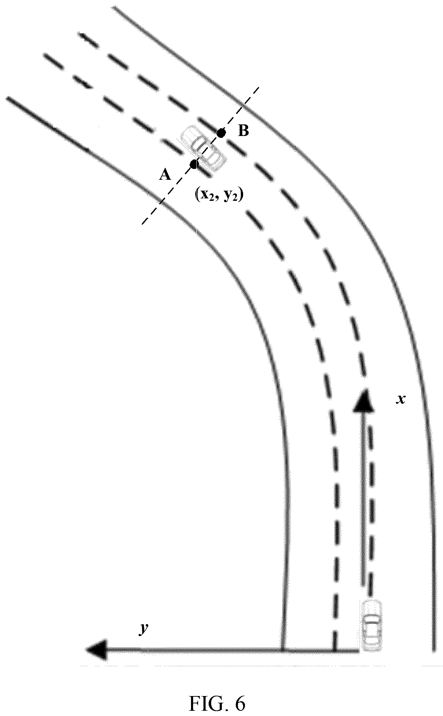

When the width between the two target road geometries closest to the target that are respectively located on the two sides of the target is used as the road width constraint of the target. Referring to a schematic diagram of a scenario shown in FIG. 6, the location of the target in the coordinate system is $(x_2, y_2)$, and points of intersection of a straight line that passes the location and that is perpendicular to the two target road geometries closest to the target and the two target road geometries are respectively a point A and a point B, and a distance between the point A and the point B is a width of the road. The straight line that is perpendicular to the two target road geometries closest to the target may be represented as follows:

$$y = -\frac{1}{\phi^1} x + y_0 + \frac{1}{\phi^1} x_0 \qquad\qquad \text{Formula (19).}$$

In Formula (19), $\phi^1 = \tan \varphi^1$. Herein, $\varphi^1$ is a tangent direction angle that is of the two target road geometries closest to the target and that is at the location $(x_2, y_2)$, and $\phi^1$ is a heading of the two target road geometries closest to the target at the location $(x_2, y_2)$.

The distance between the point A and the point B may be determined based on Formula (19) and an expression of the two target road geometries closest to the target, and the distance is the width of the road.

In addition, in this embodiment of this application, a distance between the target and each target road geometry may alternatively be used as the road width constraint of the target. In this case, the determining a road width constraint of the target based on the at least one target road geometry and the moving state of the target includes:
determining at least one distance between the target and the at least one target road geometry, where the at least one distance is the road width constraint of the target.

Alternatively, the distance between the target and the at least one target road geometry is used as the road width constraint of the target. Correspondingly, in this case, the determining a road width constraint of the target based on the at least one target road geometry and the moving state of the target includes:
determining at least one distance between the target and the at least one target road geometry, and determining that a largest value or a smallest value of the at least one distance is the road width constraint of the target.

Alternatively, the determining a road width constraint of the target based on the at least one target road geometry and the moving state of the target includes:
determining a distance between the target and the at least one target road geometry, and determining an average value of the at least one distance as the road width constraint of the target. In other words, the average value of the at least one distance between the target and the at least one target road geometry is used as the road width constraint of the target.

In the foregoing step, the distance between the target and the target road geometry is a minimum distance between the target and the target road geometry. A schematic diagram of a corresponding target road geometry is drawn based on a formula (for example, Formula (1) to Formula (8)) corresponding to the target road geometry. The schematic diagram of the target road geometry is usually a curve, and a connection line segment between the target location and each point in the curve is obtained. A length of a shortest connection line segment is the distance between the target and the target road geometry.

By performing the foregoing steps, the road width constraint can be obtained. In comparison with the conventional technology, in this embodiment of this application, the road width constraint is obtained based on the road geometry, and the features such as the curvature and the heading of the road on which the target is located are fully considered. Therefore, the obtained road width constraint is more accurate. Further, the target is tracked based on the road width constraint obtained in this embodiment of this application, to further improve target tracking accuracy.

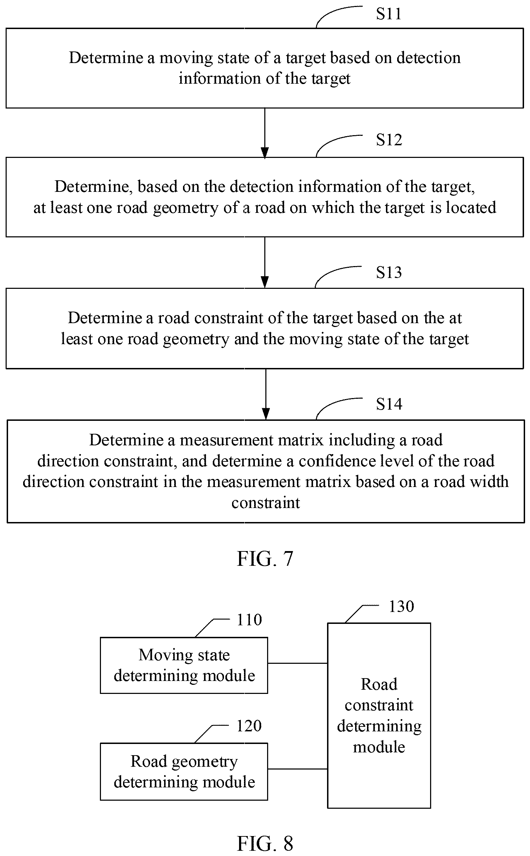

Further, in this embodiment of this application, the target may alternatively be tracked based on the road direction constraint and the road width constraint. In this case, referring to a schematic diagram of an operating procedure shown in FIG. 7, this embodiment of this application further includes the following steps:

Step S14: Determine a measurement matrix including the road direction constraint, and determine a confidence level of the road direction constraint in the measurement matrix based on the road width constraint.

In the conventional technology, after a road direction constraint and a road width constraint are obtained, a measurement matrix is determined based on the road direction constraint and the road width constraint, and a moving state of a target is estimated based on the measurement matrix, to complete target tracking. For example, the measurement matrix may be substituted into a measurement equation of a Kalman filter algorithm, and the moving state of the target is estimated based on the measurement equation. Certainly, the measurement equation may alternatively be substituted into another tracking algorithm. This is not limited in this embodiment of this application.

However, according to the solution in this embodiment of this application, after at least one of the road direction constraint and the road width constraint is obtained, the measurement equation may be obtained based on the obtained road direction constraint and/or road width constraint, and the measurement matrix determined in this embodiment of this application is used to replace the measurement matrix in the conventional technology. In other words, the measurement matrix determined in this embodiment of this application is substituted into a tracking algorithm, to implement target tracking.

In this case, because at least one of the road direction constraint and the road width constraint can be obtained according to this embodiment of this application, the road direction constraint and/or the road width constraint obtained according to the solution in this embodiment of this application are/is more accurate. Therefore, the measurement matrix obtained according to this embodiment of this application is more accurate. Correspondingly, in comparison with the conventional technology, accuracy is higher when the target is tracked according to the solution in this embodiment of this application.

When the used tracking algorithm is the Kalman filter algorithm, in a feasible implementation, the measurement matrix may be represented by using the following matrix:

$$\begin{pmatrix} \rho \\ \beta \\ \eta \\ \phi \end{pmatrix} \qquad \text{Matrix (1).}$$

In Matrix (1), $\rho = \sqrt{x^2 + y^2}$, $\beta = a \tan_2 (y,x)$, $\eta = \dfrac{vx + vy}{\sqrt{x^2 + y^2}}$, and $\phi$ is the road direction constraint determined in step S13. Herein, $(x, y)$ is coordinates of the location of the target in the coordinate system, $vx$ is an x-axis velocity of the target, and $vy$ is a y-axis velocity of the target. When $vx$ and $vy$ are obtained by the radar through measurement, $vx$ and $vy$ are velocities of the target relative to the radar. For example, $vx$ is 2 m/s when an actual moving velocity of the target on an x-axis is 3 m/s, the radar and the target have a same moving direction, and an actual moving velocity of the radar is 1 m/s.

In addition, after the measurement matrix is determined, the confidence level of the road direction constraint in the measurement matrix needs to be further determined based on the road width constraint. The confidence level of the road direction constraint in the measurement matrix is usually related to measured noise $n_v$, and larger measured noise $n_v$ indicates a lower confidence level of the road direction constraint in the measurement matrix. However, the measured noise $n_v$ is usually proportional to the road width constraint. A larger road width constraint indicates larger

measured noise $n_v$. In other words, a larger road width constraint indicates a lower confidence level of the road direction constraint in the measurement matrix.

In a feasible implementation, a mapping relationship between the road width constraint and the measured noise $n_v$ and a mapping relationship between the measured noise $n_v$ and the confidence level of the road direction constraint in the measurement matrix may be set, so that the confidence level of the road direction constraint in the measurement matrix can be determined based on the road width constraint and the foregoing two mapping relationships. To be specific, measured noise corresponding to the target is first determined based on the mapping relationship between the road width constraint and the measured noise and the road width constraint. Then, the confidence level of the road direction constraint in the measurement matrix is determined based on the mapping relationship between the measured noise and the confidence level of the road direction constraint in the measurement matrix and the measured noise corresponding to the target.

Alternatively, a mapping relationship between the road width constraint and the confidence level of the road direction constraint in the measurement matrix may be directly set. In this case, the confidence level of the road direction constraint in the measurement matrix may be determined based on the road width constraint and the mapping relationship.

Further, after the confidence level of the road direction constraint in the measurement matrix is determined, the target can be tracked based on the measurement matrix and the tracking algorithm.

In the solution disclosed in this embodiment of this application, the target may move in two-dimensional space or three-dimensional space. When the target moves in the two-dimensional space, the road direction constraint and the road width constraint of the target may be determined based on the foregoing formulas and the foregoing algorithm. In addition, when the target moves in the three-dimensional space, in a process of determining the road direction constraint and the road width constraint of the target, a height of the target may not be considered, and the road direction constraint and the road width constraint of the target may still be determined based on the foregoing formulas and the foregoing algorithm. In this case, each parameter applied in a calculation process is a parameter of a plane in which the target is located.

In the foregoing embodiment, a manner of determining the road constraint based on a road geometry in which the target is located is disclosed. In addition, in an actual motion scenario of the target, the moving state of the target is usually variable. For example, a lane changes sometimes. When the target changes a lane, there may be a large deviation between an actual moving direction of the target and a tangent direction angle of the road geometry.

Therefore, when the target changes the lane, the measured noise $n_v$ needs to be further increased. In other words, in this embodiment of this application, whether the target changes the lane needs to be further determined. When the target changes the lane, the measured noise $n_v$ needs to be further increased, and the confidence level of the road direction constraint in the measurement matrix is determined based on the adjusted measured noise $n_v$.

Accordingly, this application discloses another embodiment. In this embodiment, after the measured noise corresponding to the target is determined based on the mapping relationship between the road width constraint and the measured noise and the road width constraint, the following steps are further included:

first determining a moving state change parameter of the target based on the moving state of the target; and
when a comparison result of the moving state change parameter of the target and a corresponding threshold indicates that a degree of change of a curvature or a degree of change of a curvature change rate of the target road geometry at a fourth location needs to be determined, determining the degree of change of the curvature or the degree of change of the curvature change rate of the target road geometry at the fourth location, where the fourth location is a location that is located in the target road geometry and whose distance from the target falls within a third distance range; and when the degree of change of the curvature or the degree of change of the curvature change rate is greater than a third threshold, increasing the measured noise corresponding to the target.

When the comparison result of the moving state change parameter of the target and the corresponding threshold indicates that the degree of change of the curvature or the degree of change of the curvature change rate of the target road geometry at the fourth location needs to be determined, the fourth location is a location that is located in the target road geometry and whose distance from the target falls within the third distance range. The third distance range is a preset or predefined range, and the third distance range may be the same as the first distance range, or may be different from the first distance range. This is not limited in this embodiment of this application. Because the distance between the fourth location and the target falls within the third distance range, it indicates that the fourth location is close to the target.

In this embodiment of this application, whether the target may change the lane is determined based on the comparison result of the moving state change parameter of the target and the corresponding threshold. In addition, when the comparison result indicates that the target may change the lane, whether the target may change the lane is further determined based on the degree of change of the curvature or the degree of change of the curvature change rate of the target road geometry at the fourth location. In this case, when the degree of change of the curvature or the degree of change of the curvature change rate is greater than the third threshold, it indicates that the target changes the lane. In this case, the measured noise $n_v$ needs to be increased.

In addition, when the comparison result of the moving state change parameter of the target and the corresponding threshold indicates that the degree of change of the curvature or the degree of change of the curvature change rate of the target road geometry at the fourth location does not need to be determined, it indicates that the target does not change the lane.

Correspondingly, in this embodiment of this application, that the confidence level of the road direction constraint in the measurement matrix is determined based on the mapping relationship between the measured noise and the confidence level of the road direction constraint in the measurement matrix and the measured noise corresponding to the target includes:

determining the confidence level of the road direction constraint in the measurement matrix based on the increased measured noise and the mapping relationship between the measured noise and the confidence level of the road direction constraint in the measurement matrix.

In this embodiment of this application, the moving state change parameter of the target is determined based on the moving state of the target, and then whether the measured noise needs to be increased is determined based on the moving state change parameter of the target. In other words, whether the target changes the lane may be determined, and the measured noise is increased when the lane changes. According to the solution in this embodiment of this application, whether the lane changes in a target moving process can be considered, so that the confidence level of the road direction constraint in the measurement matrix can be determined based on a plurality of moving states of the target. Correspondingly, accuracy of determining the confidence level of the road direction constraint in the measurement matrix can be improved, and target tracking accuracy can be further improved.

The moving state change parameter may be a parameter in a plurality of forms. For example, the moving state includes an average value of a normalized innovation squared (normalized innovation squared, NIS) parameter corresponding to the at least one target road geometry, or the moving state change parameter includes: curvature of a historical moving track of the target or a degree of change of the curvature.

In a feasible implementation of this embodiment of this application, the average value of the NIS parameter corresponding to the at least one target road geometry may be used as the moving state change parameter. When the moving state change parameter of the target is the average value of the NIS parameter, and the moving state change parameter of the target is greater than the corresponding threshold, it indicates that the target may change the lane. The degree of change of the curvature or the degree of change of the curvature change rate of the target road geometry at the fourth location needs to be determined, so that whether the target changes the lane is determined based on the degree of change of the curvature or the degree of change of the curvature change rate of the target road geometry at the fourth location.

The NIS parameter is used to represent a matching degree between the moving state that is of the target and that is obtained based on the Kalman filter algorithm and an actual moving state of the target. A larger NIS parameter indicates a lower matching degree between the matching degree between the moving state that is of the target and that is obtained based on the Kalman filter algorithm and the actual moving state of the target. When the target changes the lane, the NIS parameter of the target usually changes sharply. Therefore, an average value of NIS parameters corresponding to all the target road geometries may be used as the moving state change parameter.

An NIS parameter that is of the target and that corresponds to one target road geometry may be calculated based on the following formula:

$$NIS(i) = \left\{ y \middle/ (y - \hat{y})^T S^{-1} (y - \hat{y}) \right\} \qquad \text{Formula (20).}$$

Herein, $NIS(i)$ represents an NIS parameter value that is of the target and that corresponding to the $i$th target road geometry; $y$ represents a y-axis coordinate value of the $i$th target road geometry at the fourth location;

T represents a translocation operation; $\hat{y}$ represents that the moving state of the target is estimated based on the Kalman filter algorithm, to obtain the y-axis coordinate value of the $i$th target road geometry at the fourth location; and $S$ represents an innovation covariance matrix obtained based on the Kalman filter algorithm.

Then, the average value of the NIS parameters of all the target road geometries is obtained based on the following formula:

$$NIS\text{-}average = \sum_{i=1}^{n} NIS(i) \qquad \text{Formula (21).}$$

Herein, $NIS\text{-}average$ represents the average value of the NIS parameters of all the target road geometries;

and n represents the quantity of target road geometries.

When *NIS-average* is greater than the corresponding threshold, it indicates that a degree of change of the moving state of the target is high, and the target may change the lane.

In another feasible implementation, the curvature of the historical moving track of the target or the degree of change of the curvature is used as the moving state change parameter.

A degree of change of the curvature or a degree of change of a curvature change rate of the historical moving track may be obtained based on the following formula:

$$\omega = (\frac{1}{s-1})\sum_{r=1}^{s}(c_1(r)-\overline{c_1}) \qquad \text{Formula (22);}$$

and

$$\overline{c_1} = \frac{1}{s}\sum_{r=1}^{s}c_1(r) \qquad \text{Formula (23).}$$

In the foregoing formula, $\omega$ is the degree of change of the curvature or the degree of change of the curvature change rate of the historical moving track; $c_1(r)$ is curvature or a curvature change rate of the moving track of the target at a current moment; $c_1$ is an average value of curvature or a curvature change rate in a sliding window; s is a quantity of values of the curvature or a quantity of curvature change rates in the sliding window; and a value of s depends on a size of the sliding window.

The degree of change of the curvature or the degree of change of the curvature change rate of the historical moving track is calculated by using the sliding window. The sliding window includes a quantity of s values of the curvature or a quantity of s curvature change rates. In addition, when the values of the curvature or the curvature change rates included in the sliding window are ranked in a time sequence, a time difference between two adjacent values of the curvature or curvature change rates falls within a first time period, and a time difference between a current moment and an obtaining time of a value of the curvature or a curvature change rate obtained recently in the sliding window falls within a second time period.

When the moving state change parameter is the curvature of the historical moving track of the target or the degree of change of the curvature, the corresponding threshold is usually a product of a positive number and the curvature or the curvature change rate of the moving track of the target at the current moment, and when the moving state change parameter is less than the threshold, it indicates that the target may change the lane, and a degree of change of a curvature or a degree of change of a curvature change rate of the target road geometry at the target location needs to be further determined.

In other words, when the moving state change parameter of the target is the curvature of the historical moving track of the target or the degree of change of the curvature, if $c_1(r) > m * \omega$, it is determined that the degree of change of the moving state of the target is high, and the target may change the lane. Herein, m is a preset positive number. For example, m may be set to 3. Certainly, m may also be set to another value. This is not limited in this embodiment of this application.

When the average value of the NIS parameters corresponding to all the target road geometries is greater than the corresponding threshold value, or when the curvature of the historical moving track of the target or the degree of change of the curvature is less than the product of the preset positive number and the curvature or the curvature change rate of the moving track of the target at the current moment, it indicates that when the degree of change of the moving state of the target is high, whether the target changes the lane needs to be determined based on the degree of change of the curvature or the degree of change of the curvature change rate of the target road geometry at the target location.

When it is determined that the curvature or the curvature change rate of the target road geometry at the target location does not change, or there is a low degree of change, it indicates that the degree of change of the moving state of the target does not conform to the target road geometry. In this case, it may be determined that the target changes the lane. In addition, when the degree of change of the curvature or the degree of change of the curvature change rate of the target road geometry at the target location is high, it indicates that the degree of change of the moving state of the target conforms to the target road geometry, and it can be determined that the target does not change the lane.

In this embodiment of this application, when it is determined that the target changes the lane, the measured noise $n_v$ is further increased. An amount by which the noise is increased may be a preset fixed value. In this case, the increased measured noise $n_v$ is a result of adding the noise amount and the measured noise obtained based on the road width constraint. Alternatively, the measured noise $n_v$ corresponding to a case in which the target changes the lane may be further preset, and the measured noise $n_v$ is large measured noise $n_v$. Then, the confidence level of the road direction constraint in the measurement matrix is determined based on the measured noise $n_v$.

Apparatus embodiments of the present invention are described below, and may be used to perform the method embodiments of the present invention. For details not disclosed in the apparatus embodiments of the present invention, refer to the method embodiments of the present invention.

Another embodiment of this application discloses a road constraint determining apparatus. The road constraint determining apparatus includes at least one processing module.

The at least one processing module is configured to determine a moving state of a target based on detection information of the target;

determine, based on the detection information of the target, at least one road geometry of a road on which the target is located, where each of the at least one road geometry is represented by using at least one piece of information; and determine a road constraint of the target based on the at least one road geometry and the moving state of the target, where the road constraint includes at least one of a road direction constraint and a road width constraint.

The at least one processing module included in the road constraint determining apparatus disclosed in this embodiment of this application can perform the road constraint determining method disclosed in the foregoing embodiment of this application. By performing the road constraint determining method disclosed in the foregoing embodiment of this application, the at least one processing module can determine the road constraint of the target. In addition, in comparison with the conventional technology, the at least one processing module determines a more accurate road constraint.

Further, because the at least one processing module determines a more accurate road constraint, when the target is tracked based on the road constraint determined by the at least one processing module, target tracking accuracy can be further improved.

In addition, the at least one processing module may be logically divided into at least one module in terms of function. In an example of division, referring to a schematic diagram of a structure shown in FIG. 8, the at least one processing module may be divided into a moving state determining module 110, a road geometry determining module 120, and a road constraint determining module 130. It should be noted that logical division herein is merely an example description, to describe at least one function that the at least one processing module is configured to perform.

In this case, the moving state determining module 110 is configured to determine a moving state of a target based on detection information of the target.

The road geometry determining module 120 is configured to determine, based on the detection information of the target, at least one road geometry of a road on which the target is located. Each of the at least one road geometry is represented by using at least one piece of information.

The road constraint determining module 130 is configured to determine a road constraint of the target based on the at least one road geometry and the moving state of the target, where the road constraint includes at least one of a road direction constraint and a road width constraint.

Certainly, the at least one processing module may be divided in another manner. This is not limited in this embodiment of this application.

Further, in the road constraint determining apparatus disclosed in this embodiment of this application, the at least one processing module is further configured to determine at least one target road geometry in the at least one road geometry.

In this case, the at least one processing module is specifically configured to determine the road constraint of the target based on the at least one target road geometry and the moving state of the target.

Further, in the road constraint determining apparatus disclosed in this embodiment of this application, the at least one processing module is specifically configured to perform the following steps for each of the at least one road geometry:

determining a tangent direction angle of the road geometry at a first location, where the tangent direction angle is an included angle between a tangent line of the road geometry at the first location and a radial direction; obtaining a tangent direction angle at a target location of the target based on a lateral velocity and a radial velocity at the target location of the target, where a distance between the target location of the target and the first location falls within a first distance range; and determining the road geometry as the target road geometry if an absolute value of a difference between the tangent direction angle at the first location and the tangent direction angle at the target location is less than a first threshold.

In the foregoing solution, whether the road geometry is the target road geometry can be determined based on a tangent direction angle of a road geometry at the first location.

Further, in the road constraint determining apparatus disclosed in this embodiment of this application, the at least one processing module is specifically configured to perform the following steps for each of the at least one road geometry:
determining the road geometry as the target road geometry if a distance between the target and the road geometry falls within a second distance range.

In the foregoing solution, whether the road geometry is the target road geometry can be determined based on a distance between a road geometry and the target.

Further, in the road constraint determining apparatus disclosed in this embodiment of this application, the at least one processing module is specifically configured to perform the following steps for each of the at least one road geometry:

obtaining a distance between the target and the road geometry; and
determining, based on a quantity of the at least one road geometry, that Num road geometries at a smallest distance is the at least one target road geometry, where Num is a positive integer not less than 1.

In the foregoing solution, the target road geometry in the road geometry can be determined based on the distance between the target and the road geometry and the quantity of the at least one road geometry.

Further, in the road constraint determining apparatus disclosed in this embodiment of this application, the road direction constraint of the target may be determined in a plurality of manners. In a feasible manner, the at least one processing module is specifically configured to: determine at least one second location respectively located in the at least one target road geometry, where the at least one second location is a location closest to the target in at least one first target road geometry, and the first target road geometry is a target road geometry in which the second location is located; and
determine the road direction constraint of the target based on a confidence level of the at least one target road geometry and a tangent direction angle of the at least one target road geometry at the at least one second location.

The confidence level of the target road geometry is a confidence level of a road parameter of the target road geometry; or
the confidence level of the target road geometry is a confidence level of the tangent direction angle of the target road geometry at the second location.

When the confidence level of the target road geometry is the confidence level of the road parameter of the target road geometry, the processor is further configured to determine the confidence level of the road parameter of the target road geometry based on a variance or a standard deviation of the road parameter of the target road geometry, where the road parameter is at least one piece of information used to represent the target road geometry; or
when the confidence level of the target road geometry is the confidence level of the tangent direction angle of the target road geometry at the second location, the processor is further configured to determine the confidence level of the tangent direction angle of the target road geometry at the second location based on a variance or a standard deviation of the tangent direction angle of the target road geometry at the second location.

In another manner of determining the road direction constraint of the target, the at least one processing module is specifically configured to: determine, based on the confidence level of the target road geometry, a weight value that is of the tangent direction angle of the at least one target road geometry at the at least one second location and that exists during fusion; and
determine, based on the weight value, that a fusion result obtained after fusion is performed on the tangent direction angle is the road direction constraint of the target.

In another manner of determining the road direction constraint of the target, the at least one processing module is specifically configured to determine that the tangent direction angle at the second location is the road direction constraint of the target, where the second location is a location closest to the target in a second target road geometry, and the second target road geometry is a target road geometry with a highest confidence level in the at least one target road geometry.

In another manner of determining the road direction constraint of the target, the at least one processing module is specifically configured to determine that a tangent direction angle at a third location is the road direction constraint of the target, where the third location is a location closest to the target in a third target road geometry, and the third target road geometry is a target road geometry closest to the target in the at least one target road geometry.

Further, in the road constraint determining apparatus disclosed in this embodiment of this application, the road direction constraint of the target may be determined in a plurality of manners. In a feasible manner, the at least one processing module is specifically configured to: obtain a straight line that passes through the target location of the target and that is perpendicular to a fourth target road geometry, where the fourth target road geometry is two target road geometries closest to the target that are respectively located on two sides of the target; and
determine that a distance between two points of intersection is the road width constraint of the target, where the two points of intersection are two points of intersection of the straight line and the fourth target road geometry.

In another manner of determining the road width constraint of the target, the at least one processing module is specifically configured to determine at least one distance between the target and the at least one target road geometry, where the at least one distance is the road width constraint of the target; or the processor is specifically configured to: determine at least one distance between the target and the at least one target road geometry, and determine that a largest value or a smallest value of the at least one distance is the road width constraint of the target; or the processor is specifically configured to: determine a distance between the target and the at least one target road geometry, and determine an average value of the at least one distance as the road width constraint of the target.

Further, in this embodiment of this application, the at least one processing module is further configured to: determine a measurement matrix including the road direction constraint; and

determine a confidence level of the road direction constraint in the measurement matrix based on the road width constraint.

The at least one processing module is specifically configured to: determine, based on a mapping relationship between the road width constraint and measured noise and the road width constraint, measured noise corresponding to the target; and

determine the confidence level of the road direction constraint in the measurement matrix based on a mapping relationship between the measured noise and the confidence level of the road direction constraint in the measurement matrix and the measured noise corresponding to the target.

In addition, the at least one processing module is further configured to: after determining, based on the mapping relationship between the road width constraint and the measured noise and the road width constraint, the measured noise corresponding to the target, determine a moving state change parameter of the target based on the moving state of the target;

when a comparison result of the moving state change parameter of the target and a corresponding threshold indicates that a degree of change of a curvature or a degree of change of a curvature change rate of the target road geometry at a fourth location needs to be determined, determine the degree of change of the curvature or the degree of change of the curvature change rate of the target road geometry at the fourth location, where the fourth location is a location that is located in the target road geometry and whose distance from the target falls within a third distance range; and when the degree of change of the curvature or the degree of change of the curvature change rate is greater than a third threshold, increase the measured noise corresponding to the target; and

the determining the confidence level of the road direction constraint in the measurement matrix based on a mapping relationship between the measured noise and the confidence level of the road direction constraint in the measurement matrix and the measured noise corresponding to the target includes:

determining the confidence level of the road direction constraint in the measurement matrix based on the increased measured noise and the mapping relationship between the measured noise and the confidence level of the road direction constraint in the measurement matrix.

According to the apparatus disclosed in this embodiment of this application, road constraint determining accuracy can be improved, and target tracking accuracy can be further improved.

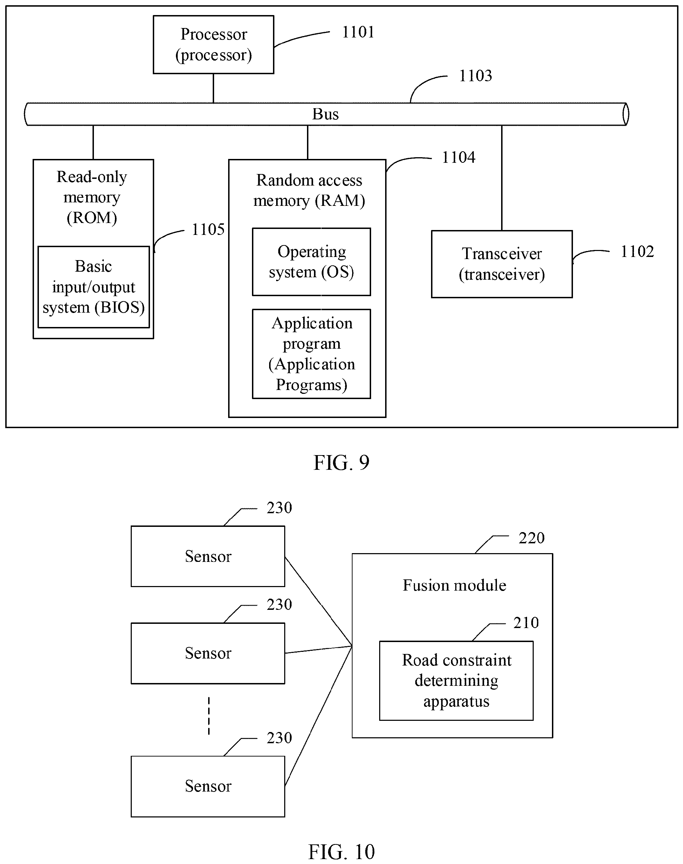

Corresponding to the road constraint determining method, another embodiment of this application further discloses a road constraint determining apparatus. Referring to a schematic diagram of a structure shown in FIG. 9, the road constraint determining apparatus includes:

at least one processor 1101 and at least one memory.

The at least one memory is configured to store program instructions.

The processor is configured to invoke and execute the program instructions stored in the memory, so that the road constraint determining apparatus performs all or some steps in the embodiments corresponding to FIG. 2, FIG. 4, FIG. 5, and FIG. 7.

Further, the apparatus may further include a transceiver 1102 and a bus 1103, and the memory includes a random access memory 1104 and a read-only memory 1105.

The processor is separately coupled to the transceiver, the random access memory, and the read-only memory by using the bus. When the mobile terminal control apparatus needs to be run, the mobile terminal control apparatus is started by using a basic input/output system solidified in a read-only memory or a bootloader boot system in an embedded system, to boot the apparatus into a normal running state. After the apparatus enters a normal running state, an application program and an operating system run in a random access memory, so that the mobile terminal control apparatus performs all or some steps in the embodiments corresponding to FIG. 2, FIG. 4, FIG. 5, and FIG. 7.

The apparatus in this embodiment of the present invention may correspond to the road constraint determining apparatus in the embodiments corresponding to FIG. 2, FIG. 4, FIG. 5, and FIG. 7. In addition, a processor, or the like in the road constraint determining apparatus may implement a function of the road constraint determining apparatus in the embodiments corresponding to FIG. 2, FIG. 4, FIG. 5, and FIG. 7 and/or various steps and methods implemented by the road constraint determining apparatus in the embodiments corresponding to FIG. 2, FIG. 4, FIG. 5, and FIG. 7.

For brevity, details are not described herein again.

It should be noted that in this embodiment, a network device may alternatively be implemented based on a general physical server with reference to a network function virtualization (English: Network Function Virtualization, NFV) technology, and the network device is a virtual network device (for example, a virtual host, a virtual router, or a virtual switch). The virtual network device may be a virtual machine (English: Virtual Machine, VM) on which a program having an advertisement packet sending function is run, and the virtual machine is deployed on a hardware device (for example, a physical server). The virtual machine is a complete computer system that is simulated by using software, that has a complete hardware system function, and that runs in a completely isolated environment. After reading this application, a person skilled in the art may virtualize a plurality of network devices with the foregoing functions on the general purpose physical server. Details are not described herein again.

Further, the road constraint determining apparatus disclosed in this embodiment of this application may be applied to a tracking device. The tracking device needs to apply detection information when determining a road constraint. The detection information may be obtained by using a sensor. The sensor usually includes radar and/or an imaging apparatus. The sensor may be connected to the road constraint determining apparatus in the tracking device, and transmit the detection information to the road constraint determining apparatus, so that the road constraint determining apparatus determines the road constraint based on the received detection information according to the method disclosed in the foregoing embodiment of this application. In addition, the sensor may be disposed within the tracking device, or the sensor may be a device independent of the tracking device.

The tracking device to which the road constraint determining apparatus is applied may be implemented in a plurality of forms. In a form, refer to a schematic diagram of a structure shown in FIG. 10. In this form, a road constraint determining apparatus 210 disclosed in an embodiment of this application is integrated into a fusion module 220. The fusion module 220 may be a software functional module, and the fusion module 220 is carried by using a chip or an integrated circuit. Alternatively, the road constraint determining apparatus may be a chip or an integrated circuit.

The fusion module 220 can be connected to at least one sensor 230, and obtain detection information transmitted by the at least one sensor 230. The fusion module 220 may implement a plurality of fusion functions. For example, after obtaining the detection information transmitted by the at least one sensor 230, the fusion module 220 performs fusion processing on the detection information, and transmits, to the road constraint determining apparatus 210, detection information obtained after fusion processing is performed, so that the road constraint determining apparatus 210 determines a road constraint based on the detection information obtained after fusion processing is performed.

For example, the fusion processing performed by the fusion module 220 on the detection information may include selection of the detection information and fusion of the detection information. The selection of the detection information means deleting detection information with a large error and determining the road constraint based on retained detection information. For example, when the detection information includes curvature of a specific road segment, where a small quantity of values of the curvature obviously differ greatly from another value of the curvature, it may be considered that the small quantity of values of the curvature are values of curvature that have a large error. Therefore, the fusion module 220 deletes the small quantity of values of the curvature. In this case, the road constraint determining apparatus 210 determines the road constraint based on a remaining value of the curvature, to improve road constraint determining accuracy.

In addition, the fusion of the detection information may be determining a plurality of pieces of detection information of a same type at a same location, and obtaining a fusion result of the plurality of pieces of detection information of a same type, so that the road constraint determining apparatus 210 determines the road constraint based on the fusion result, to improve road constraint determining accuracy. For example, the fusion module 220 may be connected to a plurality of sensors, and obtain heading angles at a same location that are detected by the plurality of sensors, to obtain a plurality of heading angles at a same location. In this case, the fusion module 220 may fuse the plurality of heading angles based on a fusion algorithm (for example, calculating an average value of the plurality of heading angles). A fusion result is a heading angle at the location. In this case, the road constraint determining apparatus 210 determines the road constraint based on the fusion result of the detection information corresponding to the plurality of sensors, so that road constraint determining accuracy can be improved.

In this form, the chip or the integrated circuit carrying the fusion module 220 may serve as a tracking device. The at least one sensor 230 is independent of the tracking device, and may transmit the detection information to the fusion module 220 in a wired or wireless manner. Alternatively, the at least one sensor 230 and the fusion module 220 jointly constitute the tracking device.

Alternatively, in another form, a road constraint determining apparatus disclosed in an embodiment of this application is connected to a fusion module, and the fusion module is connected to at least one sensor. After receiving detection information transmitted by the at least one sensor, the fusion module performs fusion processing on the received detection information, and then transmits, to the road constraint determining apparatus, a result obtained after fusion processing is performed, so that the road constraint determining apparatus determines a road constraint.

In this case, the road constraint determining apparatus and the fusion module may be carried by using a same chip or integrated circuit, or carried by using different chips or integrated circuits. This is not limited in this embodiment of this application. It can also be understood that the road constraint determining apparatus and a fusion apparatus may be disposed in an integrated manner or independently.

In addition, in this form, the road constraint determining apparatus and the fusion module each are a part of the tracking device.

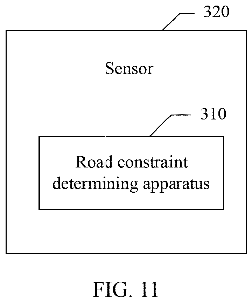

In another form, refer to a schematic diagram of a structure shown in FIG. 11. In this form, a road constraint determining apparatus 310 disclosed in an embodiment of this application is built into a sensor 320, and the road constraint determining apparatus 310 is carried by using a chip or an integrated circuit in the sensor 320. After obtaining the detection information, the sensor 320 transmits the detection information to the road constraint determining apparatus 310, and the road constraint determining apparatus 310 determines a road constraint based on the detection information. It can also be understood that the road constraint determining apparatus is a chip or an integrated circuit in the sensor.

For example, when the sensor 320 is an imaging apparatus, the imaging apparatus may transmit captured image information to the road constraint determining apparatus 310, or the imaging apparatus may process image information after completing photographing, determine a lane line model, a moving state of a target, and/or the like that correspond/corresponds to the image information, and then transmit the lane line model, the moving state of the target, and/or the like to the road constraint determining apparatus 310, so that the road constraint determining apparatus 310 determines the road constraint based on the solutions disclosed in the embodiments of this application.

In addition, in this form, when the road constraint is determined based on detection information of a plurality of sensors, another sensor may be connected to the sensor 320 into which the road constraint determining apparatus 310 is built, and the another sensor may transmit obtained detection information to the road constraint determining apparatus 310, so that the road constraint determining apparatus 310 determines the road constraint based on the detection information transmitted by the another sensor.

In this form, the sensor 320 into which the road constraint determining apparatus 310 is built may serve as a tracking device.

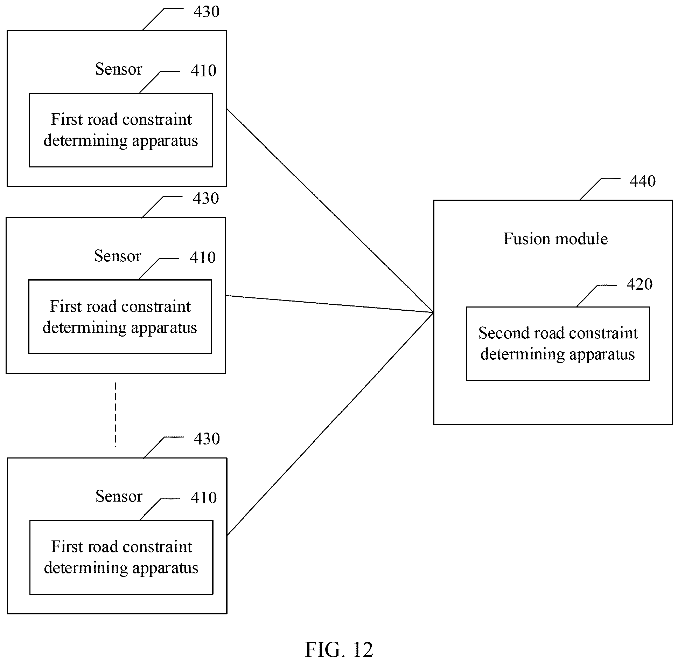

In another form, refer to a schematic diagram of a structure shown in FIG. 12. In this form, a road constraint determining apparatus disclosed in an embodiment of this application includes a first road constraint determining apparatus 410 and a second road constraint determining apparatus 420. The first road constraint determining apparatus 410 may be disposed in a sensor 430, and the second road constraint determining apparatus 420 may be disposed in a fusion module 440.

In this case, the first road constraint determining apparatus 410 may perform some steps of the road constraint determining method disclosed in the embodiments of this application based on detection information of the sensor 430, and transmit determined result information to the second road constraint determining apparatus 420, so that the second road constraint determining apparatus 420 determines a road constraint based on the result information.

In this form, the sensor 430 into which the first road constraint determining apparatus 410 is built and the fusion module 440 into which the second road constraint determining apparatus 420 is built jointly constitute a tracking device.

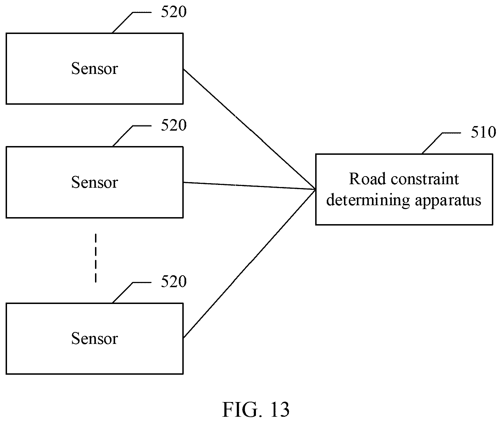

In another form, refer to a schematic diagram of a structure shown in FIG. 13. In this form, a road constraint determining apparatus 510 disclosed in an embodiment of this application is independent of at least one sensor 520, and the road constraint determining apparatus 510 is carried by using a chip or an integrated circuit.

In this case, the at least one sensor 520 may transmit detection information to the road constraint determining apparatus 510, and the road constraint determining apparatus 510 determines a road constraint according to the solutions disclosed in the embodiments of this application.

In this form, the chip or the integrated circuit carrying the road constraint determining apparatus 510 may serve as a tracking device. The at least one sensor 520 is independent of the tracking device, and may transmit the detection information to the road constraint determining apparatus 510 in a wired or wireless manner. Alternatively, the at least one sensor 520 and the road constraint determining apparatus 510 jointly constitute the tracking device.

Certainly, the road constraint determining apparatus may alternatively be implemented in another form. This is not limited in this embodiment of this application.

Further, a road constraint determining apparatus disclosed in an embodiment of this application may be applied to the intelligent driving field, and in particular, may be applied to an advanced driver assistant system ADAS or an autonomous driving system. For example, the road constraint determining apparatus may be disposed in a vehicle that supports an advanced driver assistance function or an autonomous driving function, and determine detection information based on a sensor (for example, radar and/or a photographing apparatus) in the vehicle, to determine a road constraint based on the detection information, and implement the advanced driver assistance function or the autonomous driving function.

In this case, the solution in this embodiment of this application can improve an autonomous driving capability or an ADAS capability. Therefore, the solution may be applied to an internet of vehicles, for example, may be applied to a system such as a vehicle-mounted communications technology (vehicle-to-everything, V2X), a long term evolution-vehicle (long term evolution-vehicle, LTE-V) communications system, or a vehicle-to-vehicle (vehicle-to-vehicle, V2V) communications system.

In addition, a road constraint determining apparatus disclosed in an embodiment of this application may be further disposed at a location, to track a target in a detection neighborhood region of the location. For example, the road constraint determining apparatus may be disposed at an intersection, and a road constraint corresponding to a target in a surrounding region of the intersection is determined according to the solution provided in this embodiment of this application, to track the target, and implement intersection detection.

During specific implementation, an embodiment of this application further provides a computer-readable storage medium. The computer-readable storage medium includes instructions. All or some steps in the embodiments corresponding to FIG. 2, FIG. 4, FIG. 5, and FIG. 7 may be performed when a computer-readable medium disposed in any device runs on a computer. The storage medium of the computer-readable medium may include: a magnetic disk, an optical disc, a read-only memory (English: read-only memory, ROM for short), a random access memory (English: random access memory, RAM for short), or the like.

In addition, another embodiment of this application further discloses a computer program product including instructions. When the computer program product runs on an electronic device, the electronic device is enabled to perform all or some steps in the embodiments corresponding to FIG. 2, FIG. 4, FIG. 5, and FIG. 7.

Further, an embodiment of this application further discloses a vehicle. The vehicle includes the road constraint determining apparatus disclosed in the foregoing embodiments of this application.

In the vehicle disclosed in this embodiment of this application, the road constraint determining apparatus includes at least one processor and a memory. In this case, the road constraint determining apparatus is usually carried by using a chip and/or an integrated circuit built into the vehicle. The at least one processor and the memory may be carried by using different chips and/or integrated circuits, or the at least one processor and the memory may be carried by using one chip or one integrated circuit.

Alternatively, it can be understood that the road constraint apparatus may alternatively be a chip and/or an integrated circuit, the chip is one chip or a set of a plurality of chips, and the integrated circuit is one integrated circuit or a set of a plurality of integrated circuits. For example, in an example, the road restraint device includes a plurality of chips, one chip serves as a memory in the road constraint apparatus, and another chip each serves as a processor in the road constraint apparatus.

In addition, at least one sensor may be built into the vehicle, detection information required in a road constraint determining process is obtained by using the sensor, and the sensor may include a vehicle-mounted camera and/or vehicle-mounted radar. Alternatively, the vehicle may alternatively be wirelessly connected to a remote sensor, and the detection information required in the process is determined by using the remote sensor.

In addition, a fusion module may alternatively be disposed in the vehicle, and the road constraint determining apparatus may be disposed in the fusion module, or the road constraint determining apparatus is connected to the fusion module. The fusion module is connected to the sensor, performs fusion processing on the detection information transmitted by the sensor, and then transmits a fusion processing result to the road constraint determining apparatus. The road constraint determining apparatus determines a road constraint based on the fusion processing result.

Because the road constraint determining apparatus disclosed in the foregoing embodiments of this application can improve road constraint determining accuracy, correspondingly, the vehicle disclosed in the embodiments of this application can improve an autonomous driving capability or an ADAS capability.

An embodiment of this application further discloses a system. The system can determine a road constraint according to the method disclosed in the foregoing embodiments of this application. The system includes a road constraint determining apparatus and at least one sensor. The at least one sensor includes radar and/or an imaging apparatus. The at least one sensor is configured to: obtain detection information of a target, and transmit the detection information to the road constraint determining apparatus. The road constraint determining apparatus determines the road constraint based on the detection information.

Further, the system may further include a fusion module. The road constraint determining apparatus may be disposed in the fusion module, or the road constraint determining apparatus is connected to the fusion module. The fusion module is connected to the sensor, performs fusion processing on the detection information transmitted by the sensor, and then transmits a fusion processing result to the road constraint determining apparatus. The road constraint determining apparatus determines the road constraint based on the fusion processing result.

The various illustrative logical units and circuits described in embodiments of this application may implement or operate the described functions by using a general-purpose processor, a digital information processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital information processor and a microprocessor, a plurality of microprocessors, one or more microprocessors with a digital information processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an EPROM, an EEPROM, a register, a hard disk, a removable magnetic disk, a CD-ROM, or a storage medium of any other form in the art. For example, the storage medium may connect to a processor, so that the processor can read information from the storage medium and write information into the storage medium. Optionally, the storage medium may alternatively be integrated into the processor. The processor and the storage medium may be disposed in an ASIC, and the ASIC may be disposed in UE. Optionally, the processor and the storage medium may be alternatively disposed in different components of the UE.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on a computer, the procedures or the functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive Solid State Disk (SSD)), or the like.

For same or similar parts in the embodiments in this specification, reference may be made to these embodiments, and each embodiment focuses on a difference from other embodiments. In particular, apparatus and system embodiments are basically similar to method embodiments, and therefore are described briefly. For related parts, refer to partial descriptions in the method embodiments.

A person skilled in the art may clearly understand that, the technologies in the embodiments of the present invention may be implemented by using software in addition to a necessary general hardware platform. Based on such an understanding, the technical solutions in embodiments of the present invention essentially, or a part contributing to the conventional technology may be implemented in a form of a software product. The computer software product may be stored in a storage medium, such as a ROM/RAM, a magnetic disk, or an optical disc, and includes several instructions for instructing a computer device (which may be a personal computer, a server, a network device, or the like) to perform the methods described in the embodiments or some parts of the embodiments of the present invention.

For same or similar parts in the embodiments in this specification, reference may be made to each other. In particular, the embodiments of the road constraint determining apparatus disclosed in this application are basically similar to the method embodiments, and therefore are described briefly. For related parts, refer to the descriptions in the method embodiments.

The foregoing descriptions are implementations of the present invention, but are not intended to limit the protection scope of the present invention.

## Claims

1. A road constraint determining method, comprising:

   determining a moving state of a target based on detection information of the target;
   determining, based on the detection information of the target, at least one road geometry of a road on which the target is located, wherein each of the at least one road geometry is represented by using at least one piece of information; and
   determining a road constraint of the target based on the at least one road geometry and the moving state of the target, wherein the road constraint comprises at least one of a road direction constraint and a road width constraint.

**2.** The method according to claim 1, wherein the method further comprises:

determining at least one target road geometry in the at least one road geometry; and
the determining a road constraint of the target based on the at least one road geometry and the moving state of the target comprises:
determining the road constraint of the target based on the at least one target road geometry and the moving state of the target.

**3.** The method according to claim 2, wherein the determining at least one target road geometry in the at least one road geometry comprises:
performing the following steps for each of the at least one road geometry:

determining a tangent direction angle of the road geometry at a first location, wherein the tangent direction angle is an included angle between a tangent line of the road geometry at the first location and a radial direction;
obtaining a tangent direction angle at a target location of the target based on a lateral velocity and a radial velocity at the target location of the target, wherein a distance between the target location of the target and the first location falls within a first distance range; and
determining the road geometry as the target road geometry if an absolute value of a difference between the tangent direction angle at the first location and the tangent direction angle at the target location is less than a first threshold.

**4.** The method according to claim 2, wherein the determining at least one target road geometry in the at least one road geometry comprises:
performing the following steps for each of the at least one road geometry:
determining the road geometry as the target road geometry if a distance between the target and the road geometry falls within a second distance range.

**5.** The method according to claim 2, wherein the determining at least one target road geometry in the at least one road geometry comprises:
performing the following steps for each of the at least one road geometry:

obtaining a distance between the target and the road geometry; and
determining, based on a quantity of the at least one road geometry, that Num road geometries at a smallest distance is the at least one target road geometry, wherein Num is a positive integer not less than 1.

**6.** The method according to claim 2, wherein the determining the road constraint of the target based on the at least one target road geometry and the moving state of the target comprises:

determining at least one second location respectively located in the at least one target road geometry, wherein the at least one second location is a location closest to the target in at least one first target road geometry, and the first target road geometry is a target road geometry in which the second location is located; and
determining the road direction constraint of the target based on a confidence level of the at least one target road geometry and a tangent direction angle of the at least one target road geometry at the at least one second location.

**7.** The method according to claim 6, wherein

the confidence level of the target road geometry is a confidence level of a road parameter of the target road geometry; or
the confidence level of the target road geometry is a confidence level of the tangent direction angle of the target road geometry at the second location.

**8.** The method according to claim 7, wherein when the confidence level of the target road geometry is the confidence level of the road parameter of the target road geometry, the method further comprises:

determining the confidence level of the road parameter of the target road geometry based on a variance or a standard deviation of the road parameter of the target road geometry, wherein the road parameter is at least one piece of information used to represent the target road geometry; or

when the confidence level of the target road geometry is the confidence level of the tangent direction angle of the target road geometry at the second location, the method further comprises:
determining the confidence level of the tangent direction angle of the target road geometry at the second location based on a variance or a standard deviation of the tangent direction angle of the target road geometry at the second location.

9. The method according to claim 6, wherein the determining the road direction constraint of the target based on a confidence level of the at least one target road geometry and a tangent direction angle of the at least one target road geometry at the at least one second location comprises:

   determining, based on the confidence level of the target road geometry, a weight value that is of the tangent direction angle of the at least one target road geometry at the at least one second location and that exists during fusion; and
   determining, based on the weight value, that a fusion result obtained after fusion is performed on the tangent direction angle is the road direction constraint of the target.

10. The method according to claim 6, wherein the determining the road direction constraint of the target based on a confidence level of the at least one target road geometry and a tangent direction angle of the at least one target road geometry at the at least one second location comprises:
    determining that the tangent direction angle at the second location is the road direction constraint of the target, wherein the second location is a location closest to the target in a second target road geometry, and the second target road geometry is a target road geometry with a highest confidence level in the at least one target road geometry.

11. The method according to claim 6, wherein the determining the road direction constraint of the target based on a confidence level of the at least one target road geometry and a tangent direction angle of the at least one target road geometry at the at least one second location comprises:
    determining that a tangent direction angle at a third location is the road direction constraint of the target, wherein the third location is a location closest to the target in a third target road geometry, and the third target road geometry is a target road geometry closest to the target in the at least one target road geometry.

12. The method according to claim 2, wherein the determining a road width constraint of the target based on the at least one target road geometry and the moving state of the target comprises:

    obtaining a straight line that passes through a target location of the target and that is perpendicular to a fourth target road geometry, wherein the fourth target road geometry is two target road geometries closest to the target that are respectively located on two sides of the target; and
    determining that a distance between two points of intersection is the road width constraint of the target, wherein the two points of intersection are two points of intersection of the straight line and the fourth target road geometry.

13. The method according to claim 2, wherein the determining a road width constraint of the target based on the at least one target road geometry and the moving state of the target comprises:

    determining at least one distance between the target and the at least one target road geometry, wherein the at least one distance is the road width constraint of the target; or
    determining at least one distance between the target and the at least one target road geometry, and determining that a largest value or a smallest value of the at least one distance is the road width constraint of the target; or
    determining a distance between the target and the at least one target road geometry, and determining an average value of the at least one distance as the road width constraint of the target.

14. The method according to any one of claims 1 to 13, wherein the method further comprises:

    determining a measurement matrix comprising the road direction constraint; and
    determining a confidence level of the road direction constraint in the measurement matrix based on the road width constraint.

15. The method according to claim 14, wherein the determining a confidence level of the road direction constraint in the measurement matrix based on the road width constraint comprises:

determining, based on a mapping relationship between the road width constraint and measured noise and the road width constraint, measured noise corresponding to the target; and

determining the confidence level of the road direction constraint in the measurement matrix based on a mapping relationship between the measured noise and the confidence level of the road direction constraint in the measurement matrix and the measured noise corresponding to the target.

16. The method according to claim 15, wherein after the determining, based on a mapping relationship between the road width constraint and measured noise and the road width constraint, measured noise corresponding to the target, the method further comprises:

determining a moving state change parameter of the target based on the moving state of the target;

when a comparison result of the moving state change parameter of the target and a corresponding threshold indicates that a degree of change of a curvature or a degree of change of a curvature change rate of the target road geometry at a fourth location needs to be determined, determining the degree of change of the curvature or the degree of change of the curvature change rate of the target road geometry at the fourth location, wherein the fourth location is a location that is located in the target road geometry and whose distance from the target falls within a third distance range; and

when the degree of change of the curvature or the degree of change of the curvature change rate is greater than a third threshold, increasing the measured noise corresponding to the target; and

the determining the confidence level of the road direction constraint in the measurement matrix based on a mapping relationship between the measured noise and the confidence level of the road direction constraint in the measurement matrix and the measured noise corresponding to the target comprises:

determining the confidence level of the road direction constraint in the measurement matrix based on the increased measured noise and the mapping relationship between the measured noise and the confidence level of the road direction constraint in the measurement matrix.

17. A road constraint determining apparatus, comprising:

at least one processing module, wherein

the at least one processing module is configured to determine a moving state of a target based on detection information of the target; and

the at least one processing module is further configured to: determine, based on the detection information of the target, at least one road geometry of a road on which the target is located, wherein each of the at least one road geometry is represented by using at least one piece of information; and determine a road constraint of the target based on the at least one road geometry and the moving state of the target, wherein the road constraint comprises at least one of a road direction constraint and a road width constraint.

18. The apparatus according to claim 17, wherein

the at least one processing module is further configured to determine at least one target road geometry in the at least one road geometry; and

the at least one processing module is specifically configured to determine the road constraint of the target based on the at least one target road geometry and the moving state of the target.

19. The apparatus according to claim 18, wherein

the at least one processing module is specifically configured to perform the following steps for each of the at least one road geometry:

determining a tangent direction angle of the road geometry at a first location, wherein the tangent direction angle is an included angle between a tangent line of the road geometry at the first location and a radial direction;

obtaining a tangent direction angle at a target location of the target based on a lateral velocity and a radial velocity at the target location of the target, wherein a distance between the target location of the target and the first location falls within a first distance range; and

determining the road geometry as the target road geometry if an absolute value of a difference between the tangent direction angle at the first location and the tangent direction angle at the target location is less than a first threshold.

20. The apparatus according to claim 18, wherein

the at least one processing module is specifically configured to perform the following steps for each of the at least one road geometry:
determining the road geometry as the target road geometry if a distance between the target and the road geometry falls within a second distance range.

21. The apparatus according to claim 18, wherein
the at least one processing module is specifically configured to perform the following steps for each of the at least one road geometry:

    obtaining a distance between the target and the road geometry; and
    determining, based on a quantity of the at least one road geometry, that Num road geometries at a smallest distance is the at least one target road geometry, wherein Num is a positive integer not less than 1.

22. The apparatus according to claim 18, wherein

    the at least one processing module is specifically configured to: determine at least one second location respectively located in the at least one target road geometry, wherein the at least one second location is a location closest to the target in at least one first target road geometry, and the first target road geometry is a target road geometry in which the second location is located; and
    determine the road direction constraint of the target based on a confidence level of the at least one target road geometry and a tangent direction angle of the at least one target road geometry at the at least one second location.

23. The apparatus according to claim 22, wherein

    the confidence level of the target road geometry is a confidence level of a road parameter of the target road geometry; or
    the confidence level of the target road geometry is a confidence level of the tangent direction angle of the target road geometry at the second location.

24. The apparatus according to claim 23, wherein

    when the confidence level of the target road geometry is the confidence level of the road parameter of the target road geometry, the at least one processing module is further configured to determine the confidence level of the road parameter of the target road geometry based on a variance or a standard deviation of the road parameter of the target road geometry, and the road parameter is at least one piece of information used to represent the target road geometry; or
    when the confidence level of the target road geometry is the confidence level of the tangent direction angle of the target road geometry at the second location, the at least one processing module is further configured to determine the confidence level of the tangent direction angle of the target road geometry at the second location based on a variance or a standard deviation of the tangent direction angle of the target road geometry at the second location.

25. The apparatus according to claim 22, wherein

    the at least one processing module is specifically configured to: determine, based on the confidence level of the target road geometry, a weight value that is of the tangent direction angle of the at least one target road geometry at the at least one second location and that exists during fusion; and
    determine, based on the weight value, that a fusion result obtained after fusion is performed on the tangent direction angle is the road direction constraint of the target.

26. The apparatus according to claim 22, wherein
the at least one processing module is specifically configured to determine that the tangent direction angle at the second location is the road direction constraint of the target, the second location is a location closest to the target in a second target road geometry, and the second target road geometry is a target road geometry with a highest confidence level in the at least one target road geometry.

27. The apparatus according to claim 22, wherein
the at least one processing module is specifically configured to determine that a tangent direction angle at a third location is the road direction constraint of the target, the third location is a location closest to the target in a third target road geometry, and the third target road geometry is a target road geometry closest to the target in the at least one target road geometry.

28. The apparatus according to claim 18, wherein

the at least one processing module is specifically configured to: obtain a straight line that passes through a target location of the target and that is perpendicular to a fourth target road geometry, wherein the fourth target road geometry is two target road geometries closest to the target that are respectively located on two sides of the target; and
determine that a distance between two points of intersection is the road width constraint of the target, wherein the two points of intersection are two points of intersection of the straight line and the fourth target road geometry.

29. The apparatus according to claim 18, wherein

the at least one processing module is specifically configured to determine at least one distance between the target and the at least one target road geometry, and the at least one distance is the road width constraint of the target; or
the at least one processing module is specifically configured to: determine at least one distance between the target and the at least one target road geometry, and determine that a largest value or a smallest value of the at least one distance is the road width constraint of the target; or
the at least one processing module is specifically configured to: determine a distance between the target and the at least one target road geometry, and determine an average value of the at least one distance as the road width constraint of the target.

30. The apparatus according to any one of claims 17 to 29, wherein

the at least one processing module is further configured to: determine a measurement matrix comprising the road direction constraint; and
determine a confidence level of the road direction constraint in the measurement matrix based on the road width constraint.

31. The apparatus according to claim 30, wherein

the at least one processing module is specifically configured to: determine, based on a mapping relationship between the road width constraint and measured noise and the road width constraint, measured noise corresponding to the target; and
determine the confidence level of the road direction constraint in the measurement matrix based on a mapping relationship between the measured noise and the confidence level of the road direction constraint in the measurement matrix and the measured noise corresponding to the target.

32. The apparatus according to claim 31, wherein

the at least one processing module is further configured to: after determining, based on the mapping relationship between the road width constraint and the measured noise and the road width constraint, the measured noise corresponding to the target, determine a moving state change parameter of the target based on the moving state of the target;
when a comparison result of the moving state change parameter of the target and a corresponding threshold indicates that a degree of change of a curvature or a degree of change of a curvature change rate of the target road geometry at a fourth location needs to be determined, determine the degree of change of the curvature or the degree of change of the curvature change rate of the target road geometry at the fourth location, wherein the fourth location is a location that is located in the target road geometry and whose distance from the target falls within a third distance range; and
when the degree of change of the curvature or the degree of change of the curvature change rate is greater than a third threshold, increase the measured noise corresponding to the target; and
the determining the confidence level of the road direction constraint in the measurement matrix based on a mapping relationship between the measured noise and the confidence level of the road direction constraint in the measurement matrix and the measured noise corresponding to the target comprises:

determining the confidence level of the road direction constraint in the measurement matrix based on the increased measured noise and the mapping relationship between the measured noise and the confidence level of the road direction constraint in the measurement matrix.

33. A road constraint determining apparatus, comprising:

at least one processor and a memory, wherein
the memory is configured to store program instructions; and
the at least one processor is configured to invoke and execute the program instructions stored in the memory, to enable the apparatus to perform the method according to any one of claims 1 to 16.

34. A computer-readable storage medium, wherein
the computer-readable storage medium stores instructions; and when the instructions are run on a computer, the computer is enabled to perform the method according to any one of claims 1 to 16.

35. A computer program product comprising instructions, wherein when the computer program product runs on an electronic device, the electronic device is enabled to perform the method according to any one of claims 1 to 16.

FIG. 1

S11

Determine a moving state of a target based on detection information of the target

S12

Determine, based on the detection information of the target, at least one road geometry of a road on which the target is located

S13

Determine a road constraint of the target based on the at least one road geometry and the moving state of the target

FIG. 2

FIG. 3

S121

Determine a tangent direction angle of a road geometry at a first
location

S122

Obtain a tangent direction angle at a target location of a
target based on a lateral velocity and a radial velocity at the target
location of the target

S123

Determine the road geometry as a target road geometry if an
absolute value of a difference between the tangent direction
angle at the first location and the tangent direction angle at
the target location is less than a first threshold

FIG. 4

S131

Determine at least one second location respectively
located in at least one target road geometry

S132

Determine a road direction constraint of a target based on a
confidence level of the at least one target road
geometry and a tangent direction angle of the at least one target
road geometry at the at least one second location

FIG. 5

FIG. 6

S11

Determine a moving state of a target based on detection information of the target

S12

Determine, based on the detection information of the target, at least one road geometry of a road on which the target is located

S13

Determine a road constraint of the target based on the at least one road geometry and the moving state of the target

S14

Determine a measurement matrix including a road direction constraint, and determine a confidence level of the road direction constraint in the measurement matrix based on a road width constraint

FIG. 7

110

Moving state determining module

130

Road constraint determining module

120

Road geometry determining module

FIG. 8

Processor
(processor) — 1101

— 1103

Bus

— 1104

Read-only
memory
(ROM)

— 1105

Basic
input/output
system (BIOS)

Random access
memory (RAM)

Operating
system (OS)

Application
program
(Application
Programs)

Transceiver
(transceiver) — 1102

FIG. 9

— 230

Sensor

— 230

Sensor

— 230

Sensor

— 220

Fusion module

— 210

Road constraint
determining
apparatus

FIG. 10

320

Sensor

310

Road constraint
determining apparatus

FIG. 11

FIG. 12

520

Sensor

520

Sensor

520

Sensor

510

Road constraint
determining apparatus

FIG. 13

## INTERNATIONAL SEARCH REPORT

| International application No. |
| --- |
| **PCT/CN2020/111345** |

**A.    CLASSIFICATION OF SUBJECT MATTER**

G05D 1/02(2020.01)i

According to International Patent Classification (IPC) or to both national classification and IPC

**B.    FIELDS SEARCHED**

Minimum documentation searched (classification system followed by classification symbols)

G05D

Documentation searched other than minimum documentation to the extent that such documents are included in the fields searched

Electronic data base consulted during the international search (name of data base and, where practicable, search terms used)

CNABS, CNKI, SIPOABS, DWPI, VEN, IEEE, CNTXT: 道路, 约束, 轨迹, 自动, 驾驶, 车, 探测, 运动, 速度, 方向, 坐标, 长度, 宽度, 弯曲度, 方位, 多个, 切线, 夹角, 距离, 置信度, 方差, 融合, 权重, 矩阵, 噪声, road, constraint, trajectory, automatic, driving, car, detection, movement, speed, direction, coordinates, length, width, curvature, orientation, multiple, tangent, included angle, distance, confidence, variance, fusion, weight, Matrix, noise

**C.    DOCUMENTS CONSIDERED TO BE RELEVANT**

| Category* | Citation of document, with indication, where appropriate, of the relevant passages | Relevant to claim No. |
| --- | --- | --- |
| X | CN 109375632 A (TSINGHUA UNIVERSITY) 22 February 2019 (2019-02-22) description, paragraphs 65-175, and figures 1-10 | 1-2, 4-5, 12-13, 17-18, 20-21, 28-29, 33-35 |
| A | CN 109323700 A (HEWLETT PACKARD ENTERPRISE DEVELOPMENT LP) 12 February 2019 (2019-02-12) entire document | 1-35 |
| A | CN 110398968 A (TSINGHUA UNIVERSITY) 01 November 2019 (2019-11-01) entire document | 1-35 |
| A | CN 106094812 A (GM GLOBAL TECHNOLOGY OPERATIONS LLC.) 09 November 2016 (2016-11-09) entire document | 1-35 |
| A | JP 2017085723 A (DAIMLER AG) 18 May 2017 (2017-05-18) entire document | 1-35 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 November 2020** | **01 December 2020** |

| Name and mailing address of the ISA/CN | Authorized officer |
| --- | --- |
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/111345**

| Patent document cited in search report | | | Publication date (day/month/year) | Patent family member(s) | | | Publication date (day/month/year) |
|---|---|---|---|---|---|---|---|
| CN | 109375632 | A | 22 February 2019 | CN | 109375632 | B | 20 March 2020 |
| CN | 109323700 | A | 12 February 2019 | US | 10380889 | B2 | 13 August 2019 |
| | | | | US | 2019035271 | A1 | 31 January 2019 |
| | | | | EP | 3438881 | A1 | 06 February 2019 |
| CN | 110398968 | A | 01 November 2019 | CN | 110398968 | B | 05 June 2020 |
| CN | 106094812 | A | 09 November 2016 | US | 2016313133 | A1 | 27 October 2016 |
| | | | | US | 9868443 | B2 | 16 January 2018 |
| | | | | CN | 106094812 | B | 23 April 2019 |
| | | | | DE | 102016107705 | A1 | 27 October 2016 |
| JP | 2017085723 | A | 18 May 2017 | None | | | |

Form PCT/ISA/210 (patent family annex) (January 2015)